# DEMANDE DE BREVET EUROPEEN

(11) **EP 4 718 891 A1**
(43) Date de publication de la demande: **01.04.2026**
(21) Numéro de dépôt: 25200713.3
(22) Date de dépôt: 08.09.2025
(51) Int. Cl.: H04W 4/60, H04W 12/30

(54) **PROCÉDÉS POUR CHARGER UN PROFIL DE COMMUNICATION DANS UN ÉLÉMENT SÉCURISÉ, ÉLÉMENT SÉCURISÉ, SERVEUR ET DISPOSITIF DE COMMUNICATION ASSOCIÉS**

(30) Priorité: 30.09.2024 FR 2410490
(71) Demandeur: IDEMIA France, 92400 Courbevoie (FR)
(72) Inventeur: DOS SANTOS, Elder, 92400 Courbevoie (FR); DUMOULIN, Jérôme, 92400 Courbevoie (FR)
(74) Mandataire: Idemia

(57) **Abrégé**

Le procédé de chargement d'un profil dans un élément sécurisé équipant un dispositif de communication comporte, successivement :
a) une première phase de personnalisation du dispositif de communication, comportant une première étape de transmission au dispositif de communication de données chiffrées représentatives du profil depuis un serveur de fourniture de profil ; et
b) une deuxième phase de liaison du profil avec un identifiant de l'élément sécurisé, comportant une étape d'authentification de l'élément sécurisé par le serveur de fourniture de profil, une deuxième étape de transmission d'éléments cryptographiques permettant le déchiffrement des données chiffrées représentatives du profil, depuis le serveur de fourniture de profil à l'élément sécurisé, une étape de déchiffrement des données chiffrées par l'élément sécurisé et une étape d'installation du profil par l'élément sécurisé.

## Description

### Domaine technique

La présente invention concerne des procédés pour charger un profil de communication dans un élément sécurisé, ainsi qu'un élément sécurisé, un serveur et un dispositif de communication associés à ce procédé.

La présente invention se rapporte au domaine des éléments sécurisés de type eUICC (pour « embedded Universal Integrated Circuit Card » en anglais) dans lesquels sont enregistrés des profils de communication (communément appelé « profile »). La présente invention trouve une application particulièrement avantageuse, bien que nullement limitative, pour charger et installer des profils de communication dans des éléments sécurisés de type eUICC intégrés à des dispositifs de communication utilisant les réseaux de téléphonie mobile, tels que des téléphones, des objets connectés, des véhicules, etc.

### Technique antérieure

L'invention se place notamment dans le contexte particulier de l'installation des profils de communication dans les éléments sécurisés de type eUICC intégrés à des dispositifs de communication, par exemple des terminaux de télécommunications de type téléphones intelligents (ou « smartphones » en anglais), des compteurs électriques ou d'eau communicants, des véhicules.

De façon connue, un profil de communication est un ensemble de données permettant de s'authentifier auprès d'un opérateur d'un réseau de communication et de communiquer sur ce réseau. Typiquement, un profil de communication comprend des données de souscription comme un identifiant IMSI (pour « International Mobile Subscriber Identity » en anglais), des clés de chiffrement et des paramètres d'algorithmes d'authentification propres à l'opérateur associé. Il peut en outre comprendre un système de fichiers, des applications, et/ou des règles d'exécution prédéterminées. De tels profils de communication sont notamment définis dans la norme « GSMA SGP.02 Remote Provisioning Architecture for Embedded UICC Technical Specification » par exemple dans sa version Version 4.3 du 25 January 2023 (référencée par le terme « GSMA SGP.02 » dans la suite du texte), la norme « GSMA SGP.22 RSP Technical Specification » par exemple dans sa version Version 3.1 Final du 01 December 2023 (référencé par le terme «GSMA SGP.22 » dans la suite du texte), la norme « GSMA SGP.32 eSIM IoT Technical Specification, Version 1.0.1, 04 July 2023 » (référencée par le terme « GSMA SGP.32 » dans la suite du texte) et la norme Trusted Connectivity Alliance intitulée « eUICC Profile Package : Interoperable Format Test Specification », par exemple dans sa version 3.2.1 publiée en décembre 2022 (référencée par le terme « TCA » dans la suite du texte).

Les éléments sécurisés de type eUICC sont décrits dans dans certaine des différentes normes précitées, notamment les normes « GSMA SGP.02 » « GSMA SGP.22 » et « GSMA SGP.32 ». Les éléments sécurisés de type eUICC sont intégrés de manière permanente aux dispositifs de communication pour remplacer les cartes SIM (pour « Subscriber Identity Module », soit Module d'identité de l'abonné), traditionnellement utilisées pour authentifier un utilisateur auprès de l'opérateur d'un réseau de téléphonie mobile. Les éléments sécurisés de type eUICC sont configurés pour stocker un ou plusieurs profils de communication et sont reprogrammables. Ces éléments sécurisés permettent, par exemple, à un utilisateur de changer d'opérateur sans pour autant avoir à remplacer physiquement l'élément sécurisé, comme tel est le cas lorsqu'une carte SIM est utilisée.

Dans l'état actuel de la technique, les profils de communication sont notamment chargés et installés, dans les éléments sécurisés, selon des protocoles de chargement et d'installation, tels que définis, par exemple, selon les normes « GSMA SGP.02 », « GSMA SGP.22 » ou « GSMA SGP.32 » précitées. Aussi, une nouvelle possibilité de chargement et d'installation de profils, par les fabricants de dispositifs de communication est désormais possible et connue sous la dénomination anglo-saxonne « In-Factory Profile Provisioning » (IFPP soit fourniture de profil en usine). L'installation d'un profil dans un élément sécurisé de type eUICC est en particulier définie par les normes « GSMA SGP.02 » ou « GSMA SGP.22 » précédemment citées. Un fabricant de dispositifs de communication peut, par exemple, disposer de profils de communication fournis au préalable par un serveur de fourniture de profils (c'est-à-dire le serveur SM-DP+ dans la norme « GSMA SGP.22 » précitée) et installer ces profils en usine dans les éléments sécurisés intégrés dans les dispositifs de communication. L'avantage d'une telle installation est qu'une fois le dispositif sorti d'usine, il est en mesure de communiquer sur le réseau et d'accéder aux services de l'opérateur.

Dans le protocole IFPP (par exemple, défini par la norme « GSMA SGP.41 eSIM IFPP Architecture and Requirements », non encore publié, référencée par le terme « GSMA SGP.41 » dans la suite du texte), le mécanisme actuel consiste à charger les profils (sous forme de Bound Profile Package généré par un serveur de fourniture de profil SM-DPf) par l'intermédiaire d'un FPA (pour « Factory Profile Assistant » ou assistant de profil usine, variante d'une unité de gestion de profil LPA, pour Local Profile Assistant ou assistant de profil local) dans le dispositif de communication (ou « Device »).

Un SM-DPf (pour Subscription Manager Data Preparation factory ou gestionnaire de préparation de données d'abonnement en usine) correspond à un serveur distant qui permet de télécharger et de gérer des eSIM. On peut le considérer comme un pont qui permet l'échange de données entre un dispositif et un opérateur de télécommunications.

Selon la définition de la norme « GSMA SGP.22 » (section 2.5.4), un package de profil lié (« BPP » pour Bound Profile Package) comprend une séquence de commandes TLV (pour Tag-Length-Value ou valeur de longueur de champ), soit, dans cet ordre :
- une commande TLV en clair, correspondant à la fonction InitialiseSecureChannel, qui permet d'initialiser un canal sécurisé, par le serveur SM-DP+ avec une eUICC, pour le chargement et l'installation d'un profil,
- un ensemble de commandes TLV (tag ou étiquette '87') correspondant à la fonction ConfigureISDP, qui permet de fournir des données, par le SM-DP+ à l'eUICC, pour créer et configurer un ISD-P pour le profil (pour « Issuer Security Domain Profile » ou domaine de sécurité de l'émetteur pour profil),
- un ensemble de commandes TLV (tag '88') correspondant à la fonction StoreMetadata, qui permet de fournir, par le SM-DP+ à l'eUICC, les métadonnées (« metadata » en anglais) du profil, ces métadonnées correspondant à des informations complémentaires, additionnelles ou données supplémentaires relatives à un élément particulier (par exemple le profil) ou une autre donnée,
- un ensemble de commandes TLV (tag '87') optionnelles correspondant à la fonction ReplaceSessionKeys, qui permet de remplacer les clés de session BSP (pour « BPP Security Protocol » ou procotole de sécurité pour package de profil lié) pendant le chargement d'un package de profil lié, par un nouveau jeu de clé de session,
- suivi des commandes ou segments TLV (tag '86') correspondant à la fonction LoadProfileElements, qui permet de fournir, par le SM-DP+ à l'eUICC, les éléments de profil, tels que définis par la norme « TCA » précitée et constituants du PPP (pour Protected Profile Package ou package de profil protégé), c'est-à-dire le profil SAIP (pour SIMalliance Profile Package specification ou spécification de package de profil de SIMalliance) chiffré.

Cependant, le serveur de fourniture de profil SM-DPf génère des packages de profil lié BPP lorsque l'identifiant (EID, pour eUICC Identifier ou identifiant de l'eUICC) de l'élément sécurisé (eUICC) cible est connu. En usine, obtenir cet identifiant pose des difficultés. En effet, certains fabricants de dispositifs de communication peuvent commander des éléments sécurisés eUICC à différents EUM (pour « eUICC Manufacturer » ou fabricant d'eUICC), et les éléments sécurisés eUICC peuvent être physiquement expédiés depuis différentes usines, éventuellement dans différents pays. Une réexpédition peut aussi être faite par le fabricant du dispositif de communication, selon son propre processus logistique.

Dans ce processus, il peut être difficile pour certains fabricants de dispositifs de communication de savoir exactement à quelle usine dans quel pays chaque élément sécurisé eUICC a été expédié. De plus, le fabricant de dispositifs de communication peut également avoir besoin de commander différents lots de profils, auprès de différents fournisseurs de services, éventuellement en fonction du pays destinataire du dispositif de communication. Ici aussi, la logistique de l'expédition des profils aux usines dépendrait du fabricant du dispositif. Un pays peut avoir plus d'une usine et les profils du même prestataire de services peuvent être envoyés à ces différentes usines. De plus, l'interconnexion entre les installations dépend fortement du fabricant du dispositif.

Par conséquent, la fourniture des packages de profil lié BPP peut être difficile, car une usine peut ne pas être en mesure de connaître l'identifiant (EID) de l'élément sécurisé eUICC avant de le recevoir, ne connaissant que le nombre de profils d'un fournisseur de services et le nombre d'éléments sécurisés eUICC à fournir.

Par ailleurs, l'installation d'un profil de communication dans un élément sécurisé équipant un dispositif de communication nécessite un temps particulièrement long. Selon la norme GSMA, un profil est envoyé à un élément sécurisé sous la forme d'une pluralité d'éléments de profil définis selon le standard nommé ASN.1 et/ou selon la norme « TCA » précitée, ces éléments de profil étant chiffrés.

La réception, le déchiffrement, et l'installation des éléments du profil par l'élément sécurisé sont des opérations chronophages. À l'échelle de milliers ou de millions de dispositifs de communication, le temps nécessaire pour installer en usine les profils de communication dans les éléments sécurisés est tel qu'il ne permet pas une exploitation efficiente des ressources du fabricant de dispositifs et conduit à une perte significative de productivité.

### Exposé de l'invention

La présente invention a pour objectif de remédier à tout ou partie des inconvénients de l'art antérieur, notamment ceux exposés précédemment.

À cet effet, la présente invention vise, selon un premier aspect, un procédé de chargement d'un profil dans un élément sécurisé équipant un dispositif de communication, qui comporte, successivement, pour le chargement de ce profil de communication :
a) une première phase de personnalisation du dispositif de communication, comportant une première étape de transmission au dispositif de communication de données chiffrées représentatives du profil depuis un serveur de fourniture de profil et une étape de mémorisation desdites données chiffrées dans ce dispositif de communication ; et
b) une deuxième phase de liaison du profil avec un identifiant de l'élément sécurisé, comportant une étape d'authentification de l'élément sécurisé par le serveur de fourniture de profil, une deuxième étape de transmission d'éléments cryptographiques permettant le déchiffrement des données chiffrées représentatives du profil, depuis le serveur de fourniture de profil à l'élément sécurisé, une étape de déchiffrement des données chiffrées représentatives du profil par l'élément sécurisé et une étape d'installation du profil par l'élément sécuré.

L'invention résout ainsi deux problèmes : la durée d'installation des profils dans les éléments sécurisés est reportée à une étape ultérieure, ce qui augmente la productivité du serveur du fabriquant de dispositifs de communication. De plus, il n'y a pas une préassociation (ou « pre-binding ») entre l'identifiant de l'élément sécurisé et le profil. C'est le serveur de l'opérateur (côté réseau, qui génère des scripts pour lier au moins un profi à un élément sécurisé unique) qui réalise cette préassociation. Une fois le pre-binding effectué, on envoie ce script à un serveur de fabriquant de dispositifs de communication. Puis ce serveur charge, hors connectivité avec le serveur réseau, le script sur l'élément sécurisé identifié. Le problème d'individualiser l'élément sécurisé, en associant un profil à un utilisateur et de la complexité logistique associée est limité, voire résolu.

### Dans des modes de réalisation :

- pendant la première étape de transmission, le serveur de fourniture de profil transmet au dispositif de communication des données représentatives du profil chiffrées par une clé, sans ladite clé ni d'éléments cryptographiques suffisants pour l'obtenir sans communication avec ledit serveur de fourniture de profil ; et
- la deuxième phase comporte, une étape de demande sécurisée entre l'élément sécurisé et le serveur de fourniture de profil, et en réponse à cette demande sécurisée, la deuxième étape de transmission d'éléments cryptographiques comporte la transmission d'une clé de déchiffrement des données représentatives du profil.

### Dans des modes de réalisation :

- pendant la première étape de transmission, le serveur de fourniture de profil transmet au dispositif de communication un package de profil protégé comportant le profil, et
- pendant l'étape de mémorisation desdites données chiffrées dans ce dispositif de communication, la mémoire de dispositif où est mémorisé le package de profil protégé est différente de la mémoire de l'élément sécurisé.

Dans des modes de réalisation, la deuxième phase de liaison du profil avec un identifiant de l'élément sécurisé, comporte une étape de transmission, par l'élément sécurisé au serveur de fourniture de profil, dudit identifiant de l'élément sécurisé et d'un identifiant de profil.

Dans des modes de réalisation, le procédé tel que succinctement décrit ci-dessus comporte une étape de vérification que l'identifiant de profil n'a pas déjà été lié avec un autre identifiant d'élément sécurisé et, si cet identifiant de profil a déjà été lié avec un autre identifiant d'élément sécurisé, la deuxième étape de transmission d'éléments cryptographiques n'est pas effectuée.

Dans des modes de réalisation, la deuxième étape de transmission d'éléments cryptographiques depuis le serveur de fourniture de profil à l'élément sécurisé comporte la transmission d'un en-tête de liaison comportant :
- un champ comportant des données relatives à un opérateur de réseau principal,
- un champ qui caractérise le profil en vue de sa vérification,
- la clé de déchiffrement chiffrée avec une clé de session du serveur de fourniture de profil, et
- un champ InitialiseSecureChannel comportant des données représentant ladite clé de session utilisée par le serveur de fourniture de profil pour chiffrer le champ comportant des données relatives à l'opérateur de réseau principal, la clé de déchiffrement et des données de code d'authentification de message associées au champ qui caractérise le profil.

Dans des modes de réalisation, la clé de chiffrement des données représentatives du profil est une clé symétrique, la deuxième étape de transmission d'éléments cryptographiques depuis le serveur de fourniture de profil à l'élément sécurisé comportant la transmission de cette clé symétrique.

Dans des modes de réalisation, le procédé tel que succinctement exposé ci-dessus comporte une étape de calcul, par l'élément sécurisé d'une signature de l'identifiant de profil et de l'identifiant de cet élément sécurisé, préliminairement à l'étape de transmission au serveur de fourniture de profil, de ces identifiants.

Dans des modes de réalisation, le procédé tel que succinctement exposé ci-dessus comporte une pluralité de premières étapes de transmission à des dispositifs de communication différents, de données chiffrées représentatives du même profil depuis un serveur de fabricant de dispositifs de communication et une pluralité d'étapes de mémorisation desdites données chiffrées dans ces dispositifs de communication.

Dans des modes de réalisation, les étapes de la deuxième phase sont séparées des étapes de la première phase par au moins la survenance d'un événement déclencheur notifié à une unité de gestion de profil.

Dans des modes de réalisation, l'événement déclencheur est au moins l'un parmi la liste d'événements suivants:
- une interaction avec un utilisateur terminal du dispositif de communication ;
- un arrêt et un démarrage du dispositif de communication ;
- la fin d'une batterie de tests du dispositif de communication ;
- un premier démarrage du terminal de communication hors usine ;
- une initialisation ou une réinitialisation de l'alimentation du dispositif de communication.

Selon un deuxième aspect, la présente invention vise un procédé de chargement d'un profil depuis un serveur de fourniture de profil, mis en œuvre dans un élément sécurisé équipant un dispositif de communication, qui comporte, successivement, pour le chargement de ce profil de communication :
a) une première phase de personnalisation du dispositif de communication, comportant une première étape de réception, par le dispositif de communication de données chiffrées représentatives du profil depuis le serveur de fourniture de profil, sans ladite clé ni d'éléments cryptographiques suffisants pour l'obtenir sans communication avec ledit serveur de fourniture de profil, et une étape de mémorisation desdites données chiffrées dans ce dispositif de communication ; et
b) une deuxième phase de liaison du profil avec un identifiant de l'élément sécurisé, comportant une étape de transmission, par l'élément sécurisé au serveur de fourniture de profil, d'un identifiant de l'élément sécurisé et d'un identifiant du profil, une deuxième étape de réception, par l'élément sécurisé d'éléments cryptographiques permettant le déchiffrement des données chiffrées représentatives du profil, depuis le serveur de fourniture de profil, une étape de déchiffrement des données chiffrées représentatives du profil par l'élément sécurisé et une étape d'installation du profil par l'élément sécurisé.

Selon un troisième aspect, la présente invention vise un programme d'ordinateur comportant des instructions pour l'exécution des étapes du procédé objet du deuxième aspect de l'invention.

Selon un quatrième aspect, la présente invention vise un support d'informations lisible par un processeur sur lequel est enregistré un programme d'ordinateur objet du troisième aspect de l'invention.

Selon un cinquième aspect, la présente invention vise un procédé de chargement d'un profil dans un élément sécurisé équipant un dispositif de communication mis en œuvre par un serveur de fourniture de profil, qui comporte, successivement, pour le chargement de ce profil de communication :
a) une première phase de personnalisation du dispositif de communication, comportant une première étape de transmission au dispositif de communication de données chiffrées représentatives du profil, sans ladite clé ni d'éléments cryptographiques suffisants pour l'obtenir sans communication avec ledit serveur de fourniture de profil depuis un serveur de fourniture de profil; et
b) une deuxième phase de liaison du profil avec un identifiant de l'élément sécurisé, comportant une étape d'authentification de l'élément sécurisé par le serveur de fourniture de profil et une deuxième étape de transmission d'éléments cryptographiques permettant le déchiffrement des données chiffrées représentatives du profil, depuis le serveur de fourniture de profil à l'élément sécurisé.

Selon un sixième aspect, la présente invention vise un élément sécurisé équipant un dispositif de communication, qui comporte un processeur configuré pour charger ce profil de communication en effectuant successivement :
a) une première phase de personnalisation du dispositif de communication, comportant une première étape de réception, par le dispositif de communication de données chiffrées représentatives du profil sans ladite clé ni d'éléments cryptographiques suffisants pour l'obtenir sans communication avec ledit serveur de fourniture de profil, depuis le serveur de fourniture de profil et une étape de mémorisation desdites données chiffrées dans ce dispositif de communication ; et
b) une deuxième phase de liaison du profil avec un identifiant de l'élément sécurisé, comportant une étape de transmission, par l'élément sécurisé au serveur de fourniture de profil, d'un identifiant de l'élément sécurisé et d'un identifiant du profil, une deuxième étape de réception, par l'élément sécurisé d'éléments cryptographiques permettant le déchiffrement des données chiffrées représentatives du profil, depuis le serveur de fourniture de profil, une étape de déchiffrement des données chiffrées représentatives du profil par l'élément sécurisé et une étape d'installation du profil par l'élément sécurisé.

Selon un septième aspect, la présente invention vise un dispositif de communication comprenant un élément sécurisé objet du sixième aspect de l'invention.

Selon un huitième aspect, la présente invention vise un serveur de fourniture de profil, qui comporte un processeur configuré pour charger un profil de communication dans un élément sécurisé en effectuant successivement :
a) une première phase de personnalisation du dispositif de communication, comportant une première étape de transmission au dispositif de communication de données chiffrées représentatives du profil, sans ladite clé ni d'éléments cryptographiques suffisants pour l'obtenir sans communication avec ledit serveur de fourniture de profil depuis un serveur de fourniture de profil ; et
b) une deuxième phase de liaison du profil avec un identifiant de l'élément sécurisé, comportant une étape d'authentification de l'élément sécurisé par le serveur de fourniture de profil et une deuxième étape de transmission d'éléments cryptographiques permettant le déchiffrement des données chiffrées représentatives du profil, depuis le serveur de fourniture de profil à l'élément sécurisé.

### Brève description des dessins

D'autres caractéristiques et avantages de la présente invention ressortiront de la description fournie ci-après, illustrant des modes de mise en œuvre de l'invention donnés à titre d'exemple et dépourvus de tout caractère limitatif, en référence aux dessins ci-joints :
La figure 1 représente des moyens informatiques mis en œuvre pour charger un profil dans un élément sécurisé ;
La figure 2 représente des étapes d'échanges de messages et de traitement de données par des moyens informatiques illustrés en Figure 1 ;
La Figure 3 représente des champs de données transmis entre les moyens informatiques illustrés en Figure 1 ;
La figure 4 représente un exemple d'architecture matérielle d'un dispositif de communication équipé d'un élément sécurisé selon un mode de réalisation de l'invention ;
La figure 5 représente un dispositif de communication équipé d'un élément sécurisé, un serveur de fabricant et un serveur de fourniture de profil, au cours de différentes étapes d'un procédé mis en œuvre par l'élément sécurisé et d'un procédé mis en œuvre par une unité de gestion de profil du dispositif de communication selon un mode de mise en œuvre de l'invention ; et
La figure 6 représente un dispositif de communication équipé d'un élément sécurisé au cours de différentes étapes d'un procédé mis en œuvre par l'élément sécurisé et d'un procédé mis en œuvre par une unité de gestion de profil du dispositif de communication selon un mode de mise en œuvre de l'invention ;
La figure 7 représente, sous forme d'ordinogramme, des étapes d'un procédé mis en œuvre par un élément sécurisé équipant un dispositif de communication et d'un procédé mis en œuvre par une unité de gestion de profil du dispositif de communication selon un mode de mise en œuvre de l'invention.

### Description des modes de réalisation

La présente invention s'applique, en particulier, à l'installation d'un profil de communication dans un élément sécurisé de type eUICC intégré à un dispositif de communication. La description suivante de l'invention se référera à ce contexte particulier, qui n'est donné qu'à titre d'exemple illustratif et ne doit pas limiter l'invention.

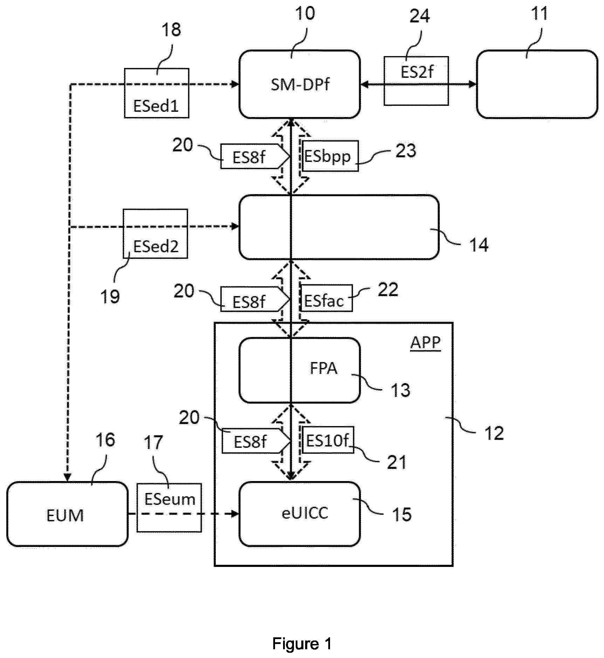

On observe, en Figure 1 un serveur de fourniture de profil SM-DPf 10 communicant notamment avec au moins un serveur d'opérateur 11. On observe aussi un dispositif de communication APP 12 comportant notamment une unité 13 de gestion de profil FPA, qui est un programme du dispositif communicant avec l'utilisateur et avec au moins un serveur SM-DPf 10, directement ou par l'intermédiaire d'un serveur 14 de fabricant de dispositifs 12, par exemple de communication. On note que l'unité 13 de gestion de profil FPA n'a pas de ressource cryptographique permettant de déchiffrer et de lui fournir des données de profil chiffrées. Le dispositif de communication APP 12 comporte aussi un élément sécurisé SE constitué ici d'une eUICC 15. Un serveur 16 de fabricant d'éléments sécurisés EUM (pour eUICC Manufacturer) peut communiquer avec le serveur SM-DPf 10, le serveur 14 ou l'élément sécurisé 15 par l'intermédiaire de différentes interfaces numériques et moyens physiques permettant d'assurer une intercommunication et des échanges de données, de messages, de commandes notamment liées aux chargements de profils dans les éléments sécurisés. ESeum 17 est l'interface entre le serveur 16 de fabricant d'éléments sécurisés EUM et l'eUICC 15. Cette interface 17 est, par exemple, utilisée pour intégrer des clés supplémentaires dans l'eUICC 15 au cours de la fabrication de l'eUICC 15. L'interface ESed1 18 permet de fournir des données de l'eUICC 15 au serveur SM-DPf 10, requises pour l'IFPP, par exemple, un certificat de l'eUICC 15, des clés publiques à usage unique ou temporaires préchargées ou les capacités de l'eUICC 15. L'interface ESed2 19 permet de fournir au fabricant de dispositifs par l'intermédiaire du serveur 14, les données de l'eUICC 15 requises pour l'IFPP. Cette interface ESed2 19 est une alternative à l'interface ESed1 18. L'interface ES8f 20 fournit un canal sécurisé de bout en bout entre le serveur de fourniture de profil SM-DPf 10 et l'eUICC 15, notamment lors du chargement et de l'installation de profiles. L'interface ES10f 21 est utilisée par l'unité 13 de gestion de profil FPA pour transférer les profils, ainsi que les données associées, à l'eUICC 15 et récupérer les statuts d'installation des profils. L'interface ESfac 22 permet au serveur 14 de fabricant de dispositifs d'envoyer les packages de profil liés (BPP), ainsi que les données associées, à l'unité 13 de gestion de profil FPA et récupérer les statuts d'installation des profils. L'interface ESbpp 23 permet au serveur de fourniture de profil SM-DPf 10, d'envoyer les packages de profil liés (BPP), ainsi que les données associées, au serveur 14 de fabricant de dispositifs. Cette interface 23 permet aussi au serveur 14 d'envoyer des données de l'eUICC 15 au serveur de fourniture de profil SM-DPf 10 et par exemple, de lui transférer des rapports de chargement de profils. L'interface ES2f 24 entre l'opérateur 11 et le serveur de fourniture de profil SM-DPf 10 permet la gestion des chargements de packages de profils à fournir sur les eUICCs 15 conformément aux mécanismes de l'IFPP.

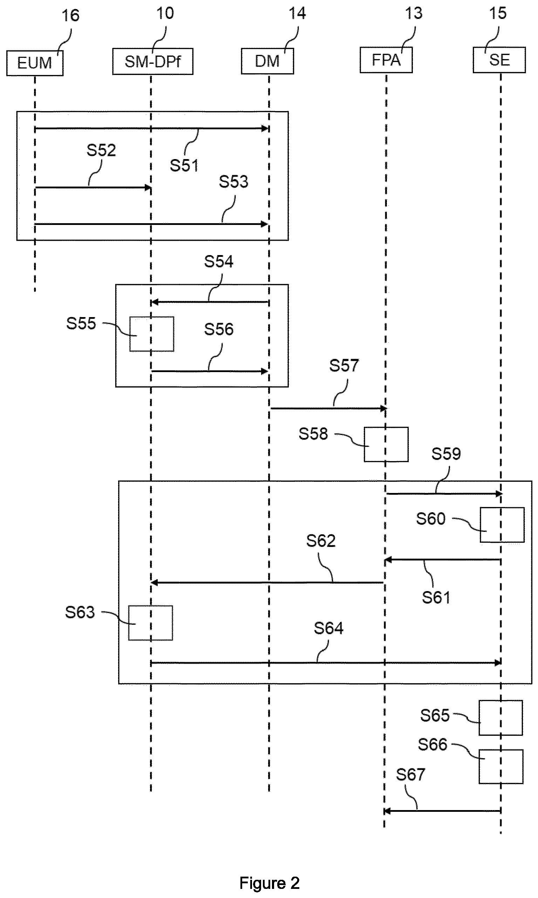

La Figure 2 illustre des échanges de messages entre des moyens informatiques illustrés en Figure 1 et des traitements de données par ces moyens informatiques. Ces moyens informatiques sont, de gauche à droite, l'EUM 16, le SM-DPf 10, le serveur 14 du fabricant de dispositifs (ou « Device Manufacturer », ici abrégé en « DM »), le FPA 13 et l'élément sécurisé SE 15 (typiquement une eUICC).

Les conditions initiales pour ces échanges sont que l'élément sécurisé SE 15 possède et conserve en mémoire un identifiant EID, des clés (notamment privée et publique) et des certificats et qu'il est préparé, par l'EUM 16, pour le chargement de profil P en usine IFPP (« In-Factory Profile Provisioning »).

Le fabricant de dispositifs DM 14 a obtenu l'élément sécurisé SE 15 de l'EUM 16. Le fabricant de dispositifs DM 14 indique à l'EUM 16 un serveur de fourniture de profil SM-DPf 10 comme destinataire des données de l'élément sécurisé SE 15. Le fabricant de dispositifs DM 14 a commandé des profils P à un MSP (pour « Mobile Service Provider » ou fournisseur de service mobile).

La procédure de chargement d'un profil P dans un élément sécurisé SE 15 est la suivante :
Les échanges S51 à S56 préparent le chargement en usine des profils P. Tant que les conditions préalables pour chaque étape sont remplies, elles peuvent être effectuées dans un ordre différent de celui spécifié ci-dessous.

Préliminairement, le fournisseur de services mobiles MSP demande au serveur SM-DPf 10 de préparer les profils P commandés.

Étape S51 : L'EUM 16 fournit des éléments sécurisés SE 15 compatibles avec le protocole IFPP au fabricant de dispositifs DM 14.

Étape S52 : l'EUM 16 adresse, au SM-DPf 10 désigné par le fabricant de dispositifs DM 14, les données de l'élément sécurisé SE 15. Ces données sont, par exemple, l'identifiant de l'élément sécurisé (par exemple l'EID pour une eUICC), les certificats et clés associés à des clés de l'élément sécurisé SE 15, par exemple des clés publiques, par exemple de type clés éphémères cryptographiques, notamment des clés de session requises par le protocole IFPP pour chaque élément sécurisé SE 15 qui est destiné à être chargé avec au moins un profil P.

Étape S53, alternativement à l'échange S52 : l'EUM 16 fournit les données de l'élément sécurisé SE 15 au fabricant de dispositifs DM 14.

Étape S54 : le fabricant de dispositifs DM 14 demande un ou des profils P au SM-DPf 10. Si les données de l'élément sécurisé SE 15 ont été envoyées au fabricant de dispositifs DM 14 conformément à l'échange S53, la demande inclut ces données (notamment l'identifiant de l'élément sécurisé EID pour une eUICC). Si les données de l'élément sécurisé SE 15 ont été envoyées au serveur SM-DPf 10, le demande inclue une donnée d'identification de l'élément sécurisé SE 15 (par exemple l'EID pour une eUICC) pour lequel la demande est effectuée et permettre au serveur SM-DPf 10 de savoir pour quel élément sécurisé SE 15 sera destiné un profil P.

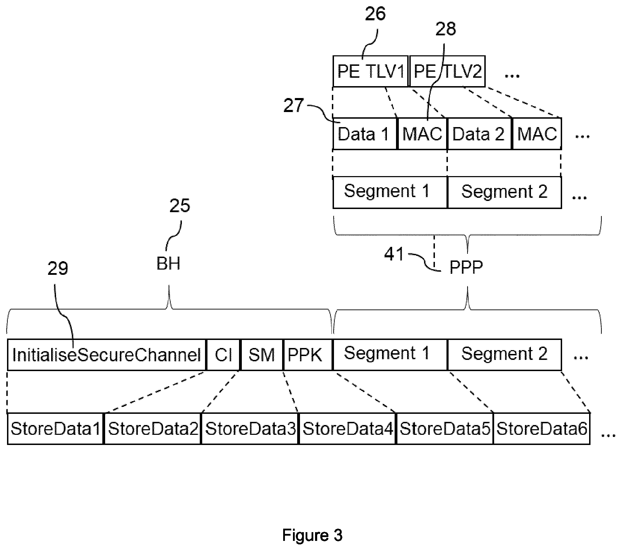

Étape S55 : le SM-DPf 10 génère, pour chaque profil P, au moins un PPP (pour « Protected Profile Package » ou package de profil protégé), chiffré avec une clé PPK décrite en regard de la Figure 3. Optionnellement, le SM-DPf 10 génère aussi, pour ce profil P, un BPP (pour « Bound Profile Package » ou package de profil lié), qui comporte le PPP 41 et un en-tête de liaison 25 (« bounding header » ou BH) décrit en regard de la Figure 3. Dans le cadre d'une génération du BPP, le serveur SM-DPf 10 génère, en plus du PPP 41 tel que décrit ci-dessus, l'en-tête de liaison (BH) 25 notamment en utilisant les données de l'élément sécurisé SE 15 qui lui ont été adressées ou fournies respectivement à l'étape 52 ou 53, notamment l'elD et par exemple, les données du certificat et/ou les clés cryptographiques associées à l'élément sécurisé SE 15, par exemple une clé publique éphémère. La génération du BBP et notamment le BH 25 à partir des données de l'élément sécurisé SE 15 permet d'associer de façon unique, un profil P (sous la forme du PPP 41 et de la référence ICCID 43, pour « Integrated Circuit Card Identifier » ou identifiant de carte à circuit intégré, du profil P) à un élément sécurisé SE 15 dédié (identifiant EID de l'élément sécurisé). Concrètement, le serveur SM-DPf 10 génère le PPP 41 et le chiffre avec une clé PPK.

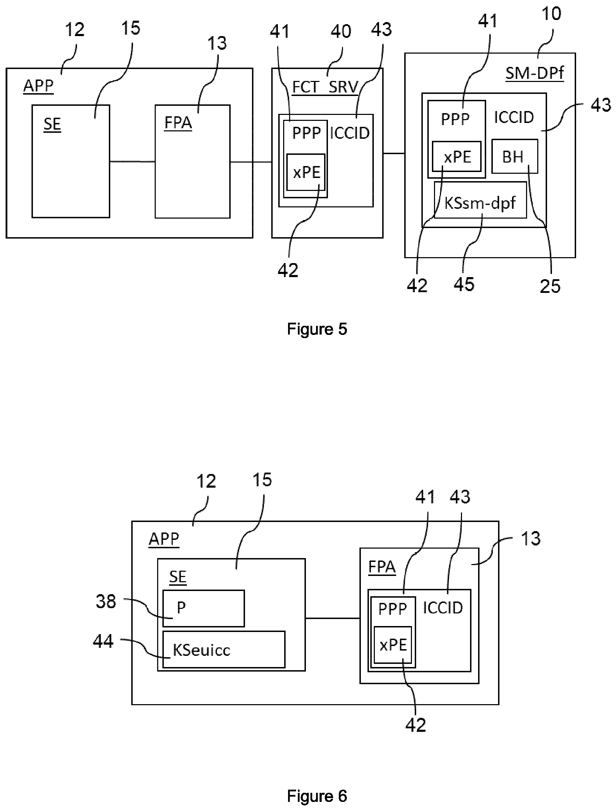

Concernant la génération du BH 25, le serveur SM-DPf 10 positionne, formate ou génère les différents éléments constitutifs du BH 25 tel que mentionné précédemment et en regard de la Figure 3, à savoir les champs (ou commande TLV, éléments) InitialiseSecureChannel 29, CI, SM, PPK. CI et PPK sont chiffrés avec une clé cryptographique, par exemple de type publique ou symétrique et, par exemple, éphémère (valable pour une utilisation temporaire, par exemple unique) dite clé de session KSsm-dpf 45 (voir Figure 6). Cette clé de session a été préalablement fournie au serveur SM-DPf 10 dans le cadre des étapes 52 ou 53, 54. Cette clé de session est irrémédiablement associée, côté serveur SM-DPf 10, à un élément sécurisé SE 15 dédié (via l'identifiant unique, par exemple EID pour une eUICC), l'élément sécurisé SE 15 en question ayant, de son côté, une clé de session locale KSeuicc 44, associée à la clé de session KSsm-dpf 45 (à savoir, par exemple, une clé privée associée ou une clé symétrique associée) pour permettre le déchiffrement et/ou la vérification des éléments du BH 25 qui seront transmis à l'élément sécurisé SE 15. SM, qui caractérise le profil P en vue de sa vérification, est associé à une donnée MAC (pour Message Authentication Code ou code d'authentification de message). La clé de session KSsm-dpf 45 est aussi utilisée dans le cadre de la génération des données MAC associées à SM. Le champ InitialiseSecureChannel 29 comporte des données qui représentent (par exemple un certificat du serveur SM-DPf) ou permettent d'identifier (par exemple un identifiant unique de clé de session) la clé de session KSsm-dpf 45 utilisée, par le serveur SM-DPf 10, pour chiffrer les données des champs CI, SM et PPK et pour calculer les données MAC associées au champ SM. Cet identifiant, par exemple, permettra à l'élément sécurisé SE 15 de savoir quelle clé devra être utilisée (c'est-à-dire la clé de session locale KSeuicc 44 associée à la clé de session KSsm-dpf 45) pour le déchiffrement et la vérification des données transmises.

Étape S56 : pour chaque profil P, le SM-DPf 10 transmet au DM 14 le PPP 41 et un identifiant de profil ICCID 43 (pour « Integrated Circuit Card Identifier ») associé au profil du PPP 41.

On note que le nombre de profils P demandés lors de l'échange S54 peut être une partie ou la totalité des profils P demandés préliminairement. Cela permet au SM-DPf 10 d'optimiser la production (par exemple, en grandes quantités) et la liaison (« binding ») réelle (par exemple, en petites quantités). Cela permet aussi au DM 14 d'optimiser sa gestion des stocks, en fonction de l'approvisionnement flexible en éléments sécurisés SE 15, et de la gestion flexible des stocks de dispositifs APP 12.

Les étapes S57 et S58 correspondent à une première phase, dite de personnalisation, du dispositif de communication APP 12.

Étape S57 : le DM 14 envoie le PPP 41 et l'ICCID 43 associé au FPA 13, pour chaque profil P susceptible d'être chargé dans l'élément sécurisé SE 15.

Étape S58 : Le FPA 13 reçoit et stocke chaque PPP 41 et ICCID 43 associé en mémoire non volatile du dispositif de communication APP 12.

Les étapes suivantes, correspondant à une deuxième phase, dite de liaison (« bounding »), peuvent être réalisées à tout moment après avoir terminé les étapes S51 à S58.

Étape S59 : quand le FPA 13 détermine qu'il faut charger au moins un profil P dans l'élément sécurisé SE 15 ou qu'un événement déclencheur spécifique, externe ou interne au dispositif est notifié au FPA 13, par exemple (ré-)initialisation de l'alimentation du dispositif APP 12, ou bien notification de fin d'une batterie de tests, par exemple, de conformité du dispositif, le FPA 13 en avertit l'élément sécurisé SE 15 par l'envoi d'une notification dite de déclenchement de chargement de profil. Cette détermination peut être effectuée par le FPA 13 en fonction d'un changement d'état du dispositif APP 12 (par exemple, son premier démarrage, ou par exemple, la fin de tests de qualité du dispositif) et/ou d'échanges avec un utilisateur du dispositif APP 12 (par exemple par saisie d'un code, éventuellement matriciel, de déclenchement d'un abonnement aux services d'un opérateur).

La notification de déclenchement de chargement de profil, envoyée par le FPA 13 à l'élément sécurisé SE 15, contient l'ICCID 43 associé au PPP 41 précédemment reçu par le FPA 13 est stocké en mémoire du dispositif de communication APP 12.

Étape S60 : L'élément sécurisé SE 15 reçoit l'ICCID 43 transmis par la commande de déclenchement de chargement de profil. Il calcule et génère alors une signature cryptographique SIGNeuicc, par exemple en utilisant une clé privée Ksign-euicc-priv et un algorithme cryptographique, par exemple RSA (pour « Rivest Shamir Adleman ») pour signer l'ICCID 43 accompagné de l'identifiant unique de l'élément sécurisé SE 15, par exemple l'EID pour une eUICC. Cette signature permet au serveur SM-DPf 10 de vérifier l'authenticité et l'intégrité d'une requête d'association (ou liaison) entre un élément sécurisé SE 15 et un profil dans le cadre d'une demande de génération d'en-tête de liaison (Bounding header BH 25) auprès du serveur SM-DPf 10.

Étape S61 : En réponse à la notification de déclenchement de chargement de profil envoyée à l'étape 59 par le FPA 13, l'élément sécurisé SE 15 répond en envoyant, au FPA 13, une réponse contenant son numéro d'identification unique EID, l'ICCID 43 reçu à l'étape 59 et la signature SIGNeuicc calculée à l'étape S60.

Étape S62 : Le FPA 13, après réception de la réponse à la notification de déclenchement de chargement de profil contenant l'EID, l'ICCID 43 et la signature SIGNeuicc, envoie une requête de transfert de BH 25 au serveur SM-DPf 10, alternativement par l'intermédiaire du DM 14. La requête de transfert de BH 25 contient l'identifiant de l'élément sécurisé SE 15 (par exemple l'EID de l'eUICC) pour lequel la requête est effectuée, ainsi que l'identifiant du profil (par exemple l'ICCID 43 associé au PPP 41 précédemment reçu) souhaité pour l'élément sécurisé SE 15 et la signature SIGNeuicc calculée par l'élément sécurisé SE 15. Les données fournies par l'eUM 16 au serveur SM-DPf 10, dans le cadre des étapes 52 ou 53,54, par exemple, le certificat de l'élément sécurisé SE 15, une clé (par exemple une clé publique) de l'élément sécurisé SE 15, permettent au serveur SM-DPf 10 de générer le BH 25 du profil P destiné à l'élément sécurisé SE 15. Le BH 25 généré pour un profil dédié, par l'intermédiaire de l'ICCID 43, permettant d'identifier un profil d'un élément sécurisé SE 15 dédié (par l'intermédiaire de l'EID de l'eUICC permettant d'identifier l'eUICC) est disponible. Le FPA 13, pour pouvoir récupérer le BH 25 disponible pour le profil de l'eUICC 15 dont il gère les profils, doit connaître l'information d'identification de l'élément sécurisé SE 15, ici l'EID de l'eUICC 15. Le FPA 13 récupère l'EID de l'eUICC 15 dans le cadre de la réponse à la notification de déclenchement de chargement de profil, et le transmet auprès du serveur SM-DPf 10 dans le cadre de sa requête de transfert de BH 25 pour le profil ciblé pour l'eUICC 15 dont le FPA 13 gère les profils. La requête, comme déjà mentionnée préalablement, contient aussi l'identifiant ICCID 43 du profil P ciblé pour lequel un BH 25 est souhaité ainsi que la signature SIGNeuicc.

Étape S63 : le serveur SM-DPf 10, après réception de la requête de transfert de BH 25 contenant l'identifiant de l'élément sécurisé SE 15 (par exemple EID pour une eUICC), l'identifiant du profil (ICCID 43), et la signature SIGNeuicc, authentifie l'élément sécurisé SE 15 avec la signature SIGNeuicc. Cette authentification est effectuée, en vérifiant (par exemple en utilisant une clé publique Ksign-euicc-pub) notamment les données reçues, donc l'authenticité et l'intégrité des données reçues (ICCID 43, EID). En cas de succès de l'authentification de l'élément sécurisé SE 15 et de l'intégrité des données, le serveur SM-DPf 10 déduit de l'identifiant de l'élément sécurisé SE 15 (par exemple l'EID) chaque profil P à installer dans l'élément sécurisé SE 15. Le serveur SM-DPf 10 vérifie que ce profil P n'a pas déjà été installé dans un élément sécurisé SE 15. Pour chaque profil P à installer dans l'élément sécurisé SE 15, le serveur SM-DPf 10 détermine le BH 25 à transmettre à l'élément sécurisé SE 15. Si le BH 25 n'a pas été constitué au cours de l'étape 55, le serveur SM-DPf 10 le constitue comme décrit en regard de la Figure 3 ou de l'étape 55.

En variante, le serveur SM-DPf 10 calcule aussi une signature cryptographique SIGNsm-dpf en utilisant une clé privée Ksign-sm-dpf-priv et un algorithme cryptographique, par exemple RSA, pour signer l'ensemble ICCID 43, EID et BH 25. Cette signature, dans le cadre de cette variante, permettra à l'élément sécurisé SE 15, destinataire de la réponse, de vérifier l'authenticité et l'intégrité des données en provenance du serveur SM-DPf 10, notamment le BH 25.

Étape S64 : le serveur SM-DPf 10 transmet le BH 25 d'un profil P à charger dans l'élément sécurisé SE 15, associé à l'identifiant unique de l'élément sécurisé SE 15 et de l'identifiant du profil ICCID 43, au FPA 13, alternativement par l'intermédiaire du DM 14. Puis le FPA 13 transmet le BH 25 en compagnie du PPP 41, de l'ICCID 43 et de l'EID à l'élément sécurisé SE 15. L'identifiant ICCID 43 associé au BH 25 reçu, permet au FPA 13 de récupérer le PPP 41 associé à ce même ICCID 43, avant de le transmettre à l'élément sécurisé SE 15 en compagnie du BH 25 et des autres données (notamment l'ICCID 43 et l'EID). En variante, la signature SIGNsm-dpf est aussi transmise à l'élément sécurisé SE 15 en compagnie du BH 25, du PPP 41 et des autres données.

Étape S65 : L'élément sécurisé SE 15, avec les informations reçues dans le BH 25, notamment via le champ InitialiseSecureChannel 29, déchiffre les données des champs CI, SM et PPK du BH reçu et vérifie les données MAC associées au champ SM du BH 25 reçu. En effet, tel que mentionné précédemment dans le texte, le champ InitialiseSecureChannel 29 (voir Figure 3) comporte des données qui représentent (par exemple un certificat du serveur SM-DPf 10) ou permettent d'identifier (par exemple un identifiant unique de clé de session) la clé de session KSsm-dpf 45 utilisée, par le serveur SM-DPf 10, pour chiffrer les données des champs CI, SM et PPK et pour calculer les données MAC associées au champ SM du BH 25 reçu.

L'élément sécurisé SE 15, de son côté, est en mesure de retrouver, ou alternativement de générer, et d'utiliser une clé de session locale KSeuicc 44, associée à la clé de session KSsm-dpf 45 (à savoir, par exemple, une clé privée associée ou une clé symétrique associée) pour permettre le déchiffrement et/ou la vérification des éléments du BH 25 reçu. Les données du champ InitialiseSecureChannel 29 permettent à l'élément sécurisé SE 15 d'identifier la clé de session KSeuicc 44 locale qui doit être utilisée par l'élément sécurisé SE 15 pour déchiffrer avec succès les données des champs CI, SM et PPK et pour calculer avec succès les données MAC associées au champ SM du BH 25 reçu. Ces données du champ InitialiseSecureChannel 29 sont, par exemple, un identifiant d'une clé de session locale KSeuicc 44 à utiliser, ou par exemple un certificat du serveur SM-DPf 10.

Les clés, côté élément sécurisé SE 15, identifiées via les données du champ initialiseSecureChannel 29, ont été préalablement stockées ou générées lors de la fabrication de l'élément sécurisé SE 15 ou au cours d'une phase de personnalisation ou de prépersonnalisation de l'élément sécurisé SE 15. Cette phase intervenant en amont des étapes 51 et 52. Avec la clé de session locale KSeuicc 44, l'élément sécurisé SE 15 déchiffre la clé de chiffrement PPK avec laquelle le PPP 41 a été chiffré. Puis, avec cette clé PPK, l'élément sécurisé SE 15 déchiffre le PPP 41. Les clés de session KSeuicc 44 et KSsm-dpf 45 sont temporaires, par exemple utilisables une fois, et ne sont exploitables que pour un profil et un élément sécurisé SE 15 considéré. Association et unicité sont ainsi assurées entre un profil et un élément sécurisé SE 15. Le profil est associé de façon unique à un seul élément sécurisé SE 15 (« binding » en anglais ou liaison).

Dans une variante, les clés de session KSeuicc 44 et KSsm-dpf 45 associées sont étiquetées « inutilisables », par exemple par l'utilisation d'un drapeau ou d'un tag dédié, une fois l'installation du profil effectuée. En variante, préalablement au déchiffrement du BH 25, l'élément sécurisé SE 15 vérifie, par exemple en utilisant une clé publique Ksign-sm-dpf-pub, la signature SIGNsm-dpf reçue en compagnie du BH 25 et des différentes données (notamment l'ICCID 43, l'EID). L'élément sécurisé SE 15 effectue, ensuite, le déchiffrement du BH 25 et in fine du PPP 41 (soit du profil P) seulement en cas de succès de vérification de la signature, garantissant ainsi l'authenticité et l'intégrité du BH 25 et des données reçues. En cas de non-succès de vérification, le déchiffrement n'est pas effectué et les données reçues sont rejetées.

Étape S66 : De manière connue, l'élément sécurisé SE 15 installe chaque profil P déchiffré dans sa mémoire. L'installation s'effectue si les déchiffrements notamment du BH 25 et du PPP 41 en étape S65 ont pu être effectués avec succès. Sinon aucune installation n'est réalisée et un résultat d'erreur d'installation sera envoyé à l'étape S67. Enfin, à l'étape S67, l'élément sécurisé SE 15 renvoie le résultat de l'installation du profil P au FPA 13. En variante, ce résultat d'installation pourra être transmis, par le FPA 13, au DM 14 et/ou au serveur SM-DPf 10.

La Figure 3 représente les champs de données des packages de profil P successivement mis en œuvre dans la mise en œuvre du procédé décrit en regard de la Figure 2. Dans cette Figure 3, la première ligne représente le package de profil en clair, c'est-à-dire non chiffré, tel que généré par le serveur SM-DPf 10. On y reconnaît une succession de paquets PE TLV1 26 (pour Profile Element Tag Lenght Value), PE TLV2, ...

La deuxième ligne représente les champs de données du PPP 41, comportant des données Data1 27 et Data2 correspondant respectivement aux paquets PE TLV1 et PE TLV2 chiffrés avec la clé PPK, et des données MAC 28 (pour Message Authentication Code ou code d'authentification de message) servant à vérifier l'intégrité des données dans les champs Data1 et Data2, respectivement. La troisième ligne représente les segments de données Segment1 et Segment2 correspondant, chacun à un champ Data1 27 et Data2 et aux données MAC 28 associées.

La quatrième ligne représente le BPP comportant les segments de données illustrés en troisième ligne et, à gauche de ces segments de données, le bounding header BH 25 constitué des champs CI (pour Configure ISDP comportant des données relatives au MNO, pour Mobile Network Operator ou opérateur de réseau mobile), SM (pour Store Metadata qui caractérise le profil P en vue de sa vérification) et PPK (la clé de chiffrement PPK chiffrée avec une clé secrète du SM-DPf). Plus à gauche, toujours dans ce bounding header BH 25, est représenté un champ InitialiseSecureChannel 29 qui comporte des données représentant la clé de session utilisée pour chiffrer les données des champs CI, PPK et pour calculer les données MAC associées au champ SM.

Enfin, la cinquième ligne représente les données représentées dans la quatrième ligne, segmentées en paquets successifs.

Pour récapituler :
- Les données non chiffrées sont les données de la première ligne, et celles des champs MAC 28, InitialiseSecureChannel 29, et du StoreData1,
- Les données chiffrées avec la clé PPK sont les données des champs Data1 27, Data2, ..., Segment1, Segment2, ..., et des StoreData5, StoreData6, ... correspondant aux précédents,
- Les données en clair, associées à une donnée MAC, générée avec la clé de session, sont les données du champ SM et du StoreData3, et
- Les données chiffrées avec la clé de session sont les données des champs CI, PPK et des StoreData2 et StoreData4.

Les trois premières lignes représentent les données transmises lors des échanges S56 à S58 de la Figure 2. Le bounding header BH 25 des deux dernières lignes représente les données transmises lors de l'étape S64 de la Figure 2.

Comme on le comprend, le FPA 13 reçoit, dans un premier temps, le PPP 41 segmenté (ou « segmented PPP » en anglais) et le stocke en mémoire non volatile du dispositif de communication APP 12.

Ultérieurement, par exemple, avant l'expédition du dispositif de communication APP 12 ou lorsque l'utilisateur reçoit et démarre ce dispositif de communication APP 12, le FPA 13 reçoit le bounding header BH 25 de la part du serveur SM-DPf 10, transmet le BH 25 accompagné du PPP 41 à l'élément sécurisé SE 15. L'élément sécurisé SE 15 installe le profile P, après avoir déchiffré le PPP 41 avec la clé de chiffrement PPK précédé des opérations telles que mentionnées pour l'étape S65 (notamment utilisation de la clé de session locale pour déchiffrer la clé PPK).

On note que la clé de session utilisée par le serveur SM-DPf 10 lors de l'étape S63 ou telle que décrite en l'étape S55 est préférentiellement une clé publique éphémère. Selon une première variante, cette clé publique éphémère est, par exemple, générée lors de la fabrication de l'élément sécurisé SE 15 et déjà transmise au serveur SM-DPf 10 lors de l'échange S52 ou étapes 53, 54 de la Figure 2. Le serveur SM-DPf 10 associe les identifiants (EID) des éléments sécurisés SE 15 aux clés éphémères lors de la génération du BH 25. Préférentiellement, l'association des identifiants EID aux clés éphémères et la génération du BH 25 s'effectue à l'étape S63.

Le FPA 13 obtient l'identifiant EID dans l'usine. Cet identifiant est associé à l'élément sécurisé SE 15 et l'identifie de façon unique. Le DM 14, après réception de l'EID en provenance de FPA 13, demande au serveur SM-DPf 10 un certain nombre de packages de profils protégés PPP 41 en lien avec l'EID et le SM-DPf 10 transmet ces PPP 41 avec un identifiant de PPP 41 (correspondant à l'identifiant du profil de l'opérateur de télécommunication, autrement appelé ICCID 43, par exemple dans « GSMA SGP.22 »). Le DM 14 peut donc associer des PPP 41 à un SM-DPf 10 et à un opérateur.

Le FPA 13 et/ou le DM 14 peut associer l'EID avec l'ICCID 43, qui est un identifiant du profil P à charger et à installer dans l'élément sécurisé SE 15. L'ICCID 43 identifie aussi l'opérateur, donc le serveur SM-DPf 10 avec lequel communiquer pour charger le PPP 41, dans une première phase, puis le BH 25, dans une deuxième phase. Pour générer le BH 25, les informations nécessaires au SM-DPf 10 sont l'EID et l'ICCID 43. Comme indiqué plus haut, lorsque le serveur SM-DPf 10 reçoit l'EID et l'ICCID 43, il vérifie qu'il n'a pas déjà reçu une requête similaire pour un élément sécurisé SE différent (EID différent) pour le même profil P (ICCID identique). Cette vérification permet au serveur SM-DPf 10 d'interdire un double chargement du même profil P sur deux éléments sécurisés SE.

Un des avantages de la présente invention est ainsi que l'on peut charger le même PPP 41 dans plusieurs dispositifs APP 12. Ce n'est que lors de la requête pour recevoir le BH 25 que le PPP 41 est associé à l'élément sécurisé SE 15 et que toute nouvelle association (c'est-à-dire installation) du même profil P est interdite pour tout autre élément sécurisé SE.

Ainsi, à la différence avec l'art antérieur, on n'alloue pas un profil P, de façon prématurée, à un élément sécurisé SE 15 et donc à un dispositif de communication APP 12, offrant ainsi une souplesse dans le cycle de production du dispositif de communication. Ce n'est, par exemple, qu'à la survenue d'un événement spécifique, par exemple une fin de batterie de tests du dispositif de communication APP 12 sur la chaîne de production, ou bien par exemple, qu'au moment de l'expédition du dispositif APP 12, voire plus tard, par exemple lors du premier démarrage du dispositif APP 12, par exemple, hors usine, que le BH 25 est reçu par le FPA 13 et que le profil P est chargé dans l'élément sécurisé SE 15 et installé. L'association unique d'un profil à un élément sécurisé SE 15 s'effectue donc plus tardivement, offrant ainsi, comme déjà évoqué, une plus grande souplesse en termes de gestion de cycle de production des dispositifs de communication APP 12 et de gestion des éléments sécurisés SE 15.

En résumé, la présente invention propose de générer le PPP 41 par le serveur SM-DPf 10 dans une première étape, le PPP 41 étant chargé dans le FPA 13 « localement » (en mémoire du dispositif de communication APP 12). Une fois que le dispositif de communication APP 12 (ou « device ») est « finalisé » (c'est-à-dire, par exemple, qu'il a passé tous les tests de qualité), le FPA 13 (ou le DM 14) demande au serveur SM-DPf 10 de recevoir l'en-tête de liaison (bounding header BH 25) associant le profil P et l'élément sécurisé SE 15. Lorsque l'en-tête de liaison est reçu par le FPA 13, le profil P peut être installé dans l'élément sécurisé SE 15 (typiquement une eUICC).

L'invention résout ainsi deux problèmes : la durée d'installation des profils P dans les éléments sécurisés SE 15 est reportée à une étape ultérieure, ce qui augmente la productivité du DM 14. De plus, il n'y a pas une préassociation (ou pre-binding) entre l'EID de l'élément sécurisé SE 15 et le profil P. C'est le serveur du MNO (côté réseau, qui génère des scripts pour lier au moins un profil P à un élément sécurisé SE unique) qui réalise cette préassociation. Une fois le pre-binding effectué, on envoie ce script à un DM 14. Puis le DM 14 charge, hors connectivité avec le serveur réseau, le script sur l'élément sécurisé SE 15 identifié par l'EID.

Le problème d'individualiser l'élément sécurisé SE 15, en associant un profil P à un utilisateur et de la complexité logistique associée est limité, voire résolu.

Les profils P sont individualisés par rapport à l'utilisateur mais pas par rapport à l'identifiant EID de l'élément sécurisé SE 15. Si bien que le DM 14 met un profil P individualisé (associé à l'utilisateur) dans un élément sécurisé SE 15 mais le profil P n'est pas associé à l'élément sécurisé SE 15. Ce profil P est lié à l'opérateur (il comporte ou représente l'IMSI, l'ICCID 43 et d'autres informations spécifiques au profil opérateur).

Ainsi, on segmente l'installation d'un profil P dans un élément sécurisé SE 15 en deux phases successives :
- Personnalisation en fonction de l'utilisateur et
- Association (binding) du profil P avec l'élément sécurisé SE.

Au départ, on dispose d'un package personnalisé mais pas encore lié à un élément sécurisé SE 15. Le profil P personnalisé est protégé par une clé qui n'est connue que du serveur SM-DPf 10, le profil P étant chargé dans la mémoire du dispositif de communication APP 12 (typiquement le téléphone mobile), mais qui n'est pas encore ni chargé ni installé dans l'élément sécurisé SE 15. À la fin de ce chargement dans la mémoire flash du dispositif de communication APP 12, sans déchiffrement, ce dispositif APP 12 (plus précisément le FPA 13) sait quel package PPP 41 a été chargé et quel élément sécurisé SE 15 est concerné. C'est la phase de personnalisation.

Plus tard, le dispositif APP 12 (le FPA 13) envoie une demande au serveur SM-DPf 10 (pas directement, mais packagé par paquets) qui génère l'information manquante (le bounding header BH 25) qui sert à l'élément sécurisé SE 15 pour déchiffrer le package PPP 41 qui a été stocké en mémoire du dispositif APP 12 (pour réaliser la phase de liaison « binding »).

Le dispositif APP 12 (le FPA 13) connaît son élément sécurisé SE 15 cible. Il envoie une requête au serveur SM-DPf 10 pour que celui-ci génère (si ce n'est déjà fait) l'information manquante permettant le lien entre le profil P et l'élément sécurisé SE 15, par exemple lors du démarrage du dispositif APP 12. Le dispositif APP 12 (FPA 13) récupère le bounding header BH 25 et le PPP 41 chiffré et les envoie à l'élément sécurisé SE 15 qui déchiffre et installe le profil P sur l'élément sécurisé SE 15.

La clé de chiffrement PPK est, initialement, seulement connue du serveur SM-DPf 10. C'est préférentiellement une clé symétrique.

L'élément sécurisé SE 15 et le serveur SM-DPf 10, tel que mentionné précédemment, possèdent chacun un préensemble de clés cryptographiques. Chacune des clés de ce préensemble possède une clé associée unique qui est, elle, stockée et/ou générée, dans l'autre entité relative (respectivement le serveur SM-DPf 10 pour l'élément sécurisé SE 15 et l'élément sécurisé SE 15 pour le serveur SM-DPf 10). Par exemple, l'élément sécurisé SE 15 possède une clé publique associée à une clé privée du serveur SM-DPf 10 et le serveur SM-DPf 10 possède une clé publique associée à une clé privée de l'élément sécurisé SE 15.

Dans un autre exemple, les clés cryptographiques des préensembles côté élément sécurisé SE 15 et serveur SM-DPf 10 sont symétriques. Chaque couple de clés associées, asymétriques (privée/publique) ou symétriques, est identifié par un identifiant unique permettant de choisir la bonne clé ou le bon couple de clés dans le préensemble du côté de l'élément sécurisé SE 15 et du côté du serveur SM-DPf 10. Chacun d'entre eux en dérive une clé secrète (dite clé de session KSsm-dpf 45 côté serveur SM-DPf 10 et clé de session locale KSeuicc 44 côté élément sécurisé SE 15) ou, par exemple, utilise directement la clé choisie dans le préensemble, qui n'est pas la clé secrète PPK qui a servi à chiffrer le package de profil protégé PPP 41. Le choix de cette clé secrète est rendu possible via le champ InitialiseSecureChannel 29 du BH 25, transmis par le serveur SM-DPf 10, in fine, par l'intermédiaire du FPA 13 à l'élément sécurisé SE 15. Le champ InitialiseSecureChannel 29 généré par le serveur SM-DPf 10 contient notamment une information quant à la clé à utiliser par l'élément sécurisé SE 15 pour qu'il puisse déchiffrer la clé PPK. Cette clé secrète est utilisée pour le transport du BH 25 depuis le serveur SM-DPf 10 vers l'élément sécurisé SE 15, notamment pour chiffrer la clé de chiffrement PPK du profil et transmise par l'intermédiaire du BH 25. À réception du BH 25, l'élément sécurisé SE 15 déchiffrera la clé PPK qui a servi à chiffrer le package de profil protégé PPP 41, en utilisant la clé secrète dite clé de session locale KSeuicc 44.

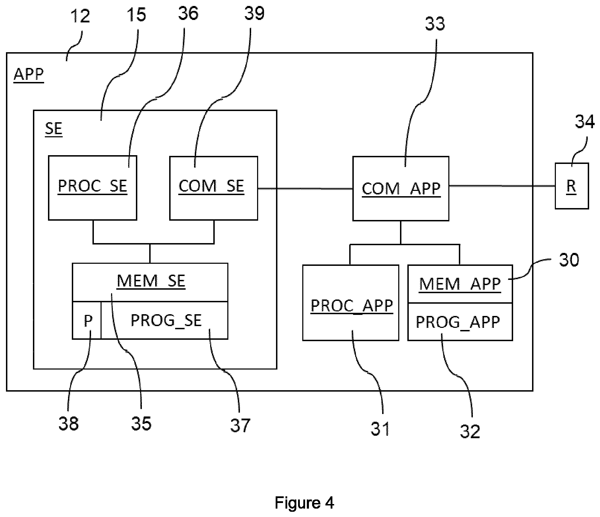

Nous introduisons ci-après, en référence à la Figure 4, l'architecture du dispositif de communication APP 12 équipé d'un élément sécurisé SE 15 selon un exemple d'implémentation de l'invention. Nous décrivons ensuite, en référence aux figures 5 à 7, un mode de mise en œuvre d'un procédé mis en œuvre par l'élément sécurisé SE 15 du dispositif de communication APP 12, et d'un procédé mis en œuvre par une unité de gestion de profil FPA 13 d'un dispositif de communication APP 12. Ces deux procédés forment, par ailleurs, un procédé pour charger au moins un profil de communication dans un élément sécurisé SE 15 équipant un dispositif de communication APP 12.

L'élément sécurisé SE 15 peut être configuré pour la mise en œuvre du procédé mentionné ci-avant. Une unité de gestion de profil FPA 13 est également décrite, configurée pour la mise en œuvre de l'autre procédé.

La Figure 4 représente un exemple d'architecture matérielle d'un dispositif de communication APP 12 équipé d'un élément sécurisé SE 15 selon un mode de réalisation de l'invention.

Le dispositif de communication APP 12 comprend selon le mode de réalisation illustré par la Figure 4 : un élément sécurisé SE 15 ; une mémoire non volatile MEM_APP 30 ; et une unité de traitement ou processeur PROC_APP 31. Le dispositif APP 12 peut, par exemple, être un téléphone mobile, une tablette, un ordinateur personnel, un capteur équipé d'un module de communication, ou tout autre dispositif de communication.

Plus particulièrement, le dispositif APP 12 dispose de l'architecture matérielle d'un ordinateur. La mémoire MEM_APP 30 constitue un support d'informations conforme à l'invention, lisible par le processeur PROC_APP 31, sur lequel est enregistré un programme d'ordinateur PROG_APP 32 conforme à un aspect de l'invention. Le programme PROG_APP 32 comporte des instructions pour réaliser des étapes d'un procédé mis en œuvre par une unité de gestion de profil FPA 13 (représentée sur les figures 5 à 7) du dispositif APP 12, lorsque le programme PROG_APP 32 est exécuté par le processeur PROC_APP 31. De plus, le programme PROG_APP 32 définit en particulier une unité de gestion de profil FPA 13 et les modules fonctionnels associés, qui s'appuient ou commandent les éléments matériels du dispositif APP 12.

Il convient de souligner que, pour chacune des étapes ou opérations décrites ci-après et mises en œuvre par l'unité de gestion de profil FPA 13, celle-ci peut comprendre un module correspondant configuré pour mettre en œuvre ladite étape ou opération.

Tel qu'illustré par la Figure 4, le dispositif APP 12 dispose d'un module de communication COM_APP 33 configuré pour communiquer avec l'élément sécurisé SE 15. Le module de communication COM_APP 33 est en outre configuré pour communiquer, par l'intermédiaire d'un réseau de communication R 34 (par exemple, un réseau de téléphonie mobile), avec d'autres dispositifs de communication (non représentés sur la Figure 4), tels que des serveurs. Aucune limitation n'est attachée à la nature des interfaces de communication entre le dispositif APP 12 et le réseau de communication R 34.

L'élément sécurisé SE 15 comprend selon le mode de réalisation illustré par la Figure 4 : une mémoire non volatile MEM_SE 35 ; et une unité de traitement ou processeur PROC_SE 36.

L'élément sécurisé SE 15 équipe le dispositif de communication APP 12. Il peut notamment être intégré de manière permanente à ce dispositif APP 12, par exemple par soudage. Nous considérons ci-après que l'élément sécurisé SE 15 est un élément de type eUICC selon la norme GSMA SGP.02 ou GSMA SGP.22 précitées. Il convient néanmoins de noter que l'invention s'applique à tout type d'élément sécurisé, y compris des éléments sécurisés autres que des éléments eUICC mais qui permettent également le stockage de profils P 38 de manière sécurisée.

Dans le contexte de l'invention, un élément sécurisé SE 15 est un dispositif électronique (par exemple, un circuit) configuré pour traiter et stocker des données de manière sécurisée, c'est-à-dire en conformité avec les règles et les exigences de sécurité fixées par les autorités de confiance ou standards du domaine bien connus de l'homme du métier (par exemple globalplaforme, ETSI, ISO, GSMA). Plus précisément, un élément sécurisé SE 15 met en œuvre un système d'exploitation, protégé contre tout accès non autorisé, et configuré pour exécuter un ensemble de programmes d'ordinateur et pour stocker des données confidentielles.

Tel qu'illustré sur la Figure 4, la mémoire MEM_SE 35 de l'élément sécurisé SE 15 est destinée à stocker au moins un profil de communication P. La mémoire MEM_SE 35 comprend notamment un ou plusieurs domaines sécurisés (communément noté ISD-P, non représenté) respectivement destinés à contenir un profil de communication P. Nous détaillons ci-après le chargement du profil de communication P 38 dans la mémoire MEM_SE 35 de l'élément sécurisé SE 15 en référence à la Figure 5.

Plus particulièrement, l'élément sécurisé SE 15 dispose de l'architecture matérielle d'un ordinateur. La mémoire MEM_SE 35 de l'élément sécurisé SE 15 constitue un support d'informations conforme à un aspect de l'invention, lisible par le processeur PROC_SE 36, sur lequel est enregistré un programme d'ordinateur PROG_SE 37 conforme à l'invention. Le programme PROG_SE 37 comporte des instructions pour réaliser des étapes d'un procédé mis en œuvre par l'élément sécurisé SE équipant le dispositif APP, lorsque le programme PROG_SE 37 est exécuté par le processeur PROC_SE 36. De plus, le programme PROG_SE 37 définit les modules fonctionnels de l'élément sécurisé SE 15, qui s'appuient ou commandent les éléments matériels de ce dernier.

On note que, pour chacune des étapes ou opérations décrites et mises en œuvre par l'élément sécurisé SE 15, ce dernier peut comprendre un module correspondant configuré pour mettre en œuvre ladite étape ou opération.

Tel qu'illustré par la Figure 4, l'élément sécurisé SE 15 dispose d'un module de communication COM_SE 39 configuré pour communiquer avec le dispositif de communication APP 12. Les communications entre l'élément sécurisé SE 15 et le dispositif APP 12 peuvent par exemple être conformes à la norme ISO 7816, et plus particulièrement à la norme ISO 7816-3 (publiée en novembre 2006) et à la norme ISO 7816-4 (publiée en mai 2020).

Les architectures du dispositif de communication APP 12 et de l'élément sécurisé SE 15 ayant été présentées, nous décrivons maintenant le procédé proposé pour charger un profil de communication P 38 dans la mémoire MEM_SE 35 de l'élément sécurisé SE 15.

La Figure 5 et la Figure 6 représentent un dispositif de communication APP 12 équipé d'un élément sécurisé SE 15 au cours de différentes étapes d'un procédé mis en œuvre par l'élément sécurisé SE 15 et d'un procédé mis en œuvre par une unité de gestion de profil FPA 13 du dispositif de communication APP 12 selon un mode de mise en œuvre de l'invention.

Comme indiqué précédemment, la présente invention permet de charger un profil de communication P 38 dans l'élément sécurisé SE 15 du dispositif APP 12 introduit en référence à la Figure 4.

L'invention vise notamment à réduire le temps nécessaire à un fabricant pour charger en usine un profil P 38 dans un élément sécurisé SE 15 d'un dispositif de communication (« In-Factory Profile Provisioning » en anglais).

Pour ce faire, la présente invention propose de charger en usine le package de profil protégé PPP 41 du profil P 38 dans le dispositif APP 12. Ensuite, le chargement du profil P 38 est suspendu (c'est-à-dire mis en pause) de sorte que le profil P 38 enregistré dans le dispositif APP 12 ne soit pas lié de manière cryptographique à l'élément sécurisé SE 15 destiné à recevoir ce profil P 38. En effet, par rapport à un BPP, le dispositif de communication APP 12 n'a pas encore reçu le bounding header BH 25 nécessaire au déchiffrement du PPP 41.

La solution proposée par l'invention permet de déporter au cours du cycle de production du dispositif ou hors d'usine, le chargement et l'installation du profil P 38 dans l'élément sécurisé SE 15, c'est-à-dire les opérations chronophages pour le fabricant, et ce en maintenant un même niveau de sécurité.

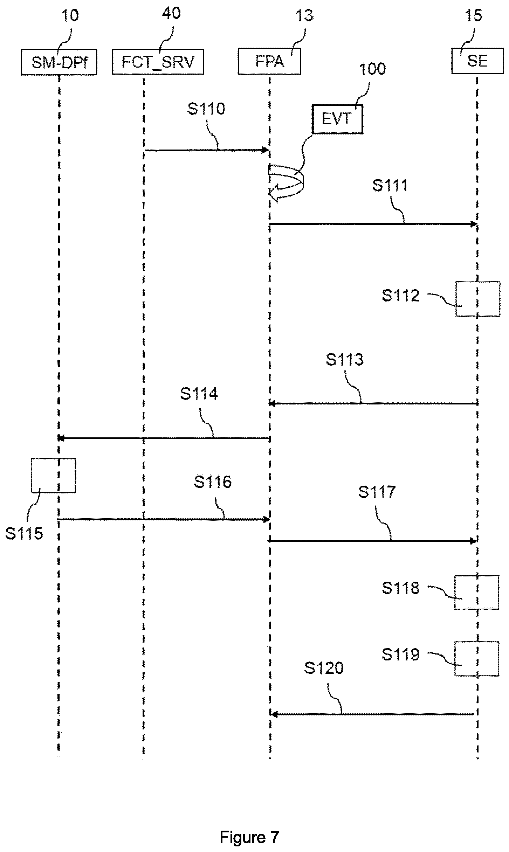

Par conséquent, le procédé proposé comprend : une première phase de chargement au cours d'une étape S110 illustrée en Figure 7 (par exemple, réalisée en usine) ; et une deuxième phase de chargement, au cours des étapes S111 et suivantes illustrées en Figure 7 (par exemple, réalisées une fois le dispositif APP 12 déployé sur le terrain ou à une étape précise durant le cycle de production du dispositif APP 12, par exemple, après la finalisation d'une batterie de tests fonctionnels en fin de cycle de production).

Il importe de noter que le procédé proposé pour charger le profil P 38 dans l'élément sécurisé SE 15 est mis en œuvre par le dispositif APP 12 et comprend : les étapes d'un procédé mis en œuvre par l'élément sécurisé SE 15 équipant le dispositif APP 12 ; et les étapes d'un procédé mis en œuvre par l'unité de gestion de profil FPA 13 du dispositif APP 12.

Le procédé proposé peut mettre en œuvre tout ou partie des étapes de la sous-procédure d'installation d'un profil P 38 conforme à la norme GSMA SGP.22. La description suivante de l'invention se référera à cette sous-procédure d'installation à titre d'exemple illustratif et non limitatif, l'invention s'appliquant bien évidemment à d'autres procédures d'installation d'un profil P 38 dans un élément sécurisé SE 15.

De plus, nous décrivons ci-dessous un exemple de mise en œuvre de l'invention dans lequel l'assistant local de profil (c'est-à-dire le « Local Profile Assistant » en anglais dans la norme GSMA SGP.22) est mis en œuvre par l'unité de gestion de profil FPA 13 du dispositif de communication APP 12. Cependant, l'invention n'est pas limitée à cet exemple, et celle-ci s'applique également aux modes de réalisation dans lesquels le module de l'assistant local de profil serait mis en œuvre par l'élément sécurisé SE 15.

La Figure 7 représente, sous forme d'ordinogramme, des étapes d'un procédé mis en œuvre par un élément sécurisé SE 15 équipant un dispositif de communication APP 12 et d'un procédé mis en œuvre par une unité de gestion de profil FPA 13 du dispositif de communication APP 12 selon un mode de mise en œuvre de l'invention.

Nous décrivons ci-après des étapes impliquant des échanges de données entre différentes entités, dont le serveur FCT_SRV 40 (par exemple le serveur de fabriquant de dispositifs DM 14 illustré en Figure 1), le serveur SM-DPf 10, l'unité de gestion de profil FPA 13, et l'élément sécurisé SE 15. Chacune de ces étapes d'échange de données est mise en œuvre par les deux entités qui communiquent entre elles. Par souci de concision, nous décrivons ces étapes d'échange de données du point de vue d'une seule entité (par exemple, l'émetteur) ; mais l'autre entité (par exemple, le récepteur) met également en œuvre une étape correspondante. Par exemple, une étape d'envoi de données par l'unité de gestion de profil FPA 13 correspondra à une étape de réception de ces données par l'élément sécurisé SE 15. De même, nous utilisons ci-après un unique signe de référence pour désigner une telle étape d'échange de données mise en œuvre par les deux entités qui communiquent entre elles (par exemple, un unique signe de référence peut être utilisé pour désigner à la fois l'envoi par l'unité de gestion de profil FPA 13, et la réception par l'élément sécurisé SE 15).

La Figure 7 illustre la première phase du chargement du profil de communication P 38 dans l'élément sécurisé SE 15. Tel qu'illustré par cette Figure 7, la première phase de chargement comprend uniquement l'étape S110 décrite ci-après.

Tel qu'illustré par la Figure 5, avant la mise en œuvre du procédé proposé, un serveur d'usine FCT_SRV 40 conserve en mémoire un package de profil protégé PPP 41 du profil P 38 fourni par un serveur de fourniture de profil SM-DPf. Le package PPP 41 comprend des éléments chiffrés xPE 42 chiffrés par la clé PPK, segmentés, associés au profil P 38 et auxquels est associée une donnée MAC à chacun d'eux tel que décrit précédemment. En variante, le package PPP 41 est accompagné d'une signature du serveur SM-DPf 10. Dans la suite du texte, par souci de concision, le terme « éléments chiffrés xPE 42 » sera relatif aux éléments chiffrés xPE, segmentés accompagnés de leurs données MAC respectives telles que mentionnées ci-avant.

À l'étape S110, le serveur d'usine FCT_SRV 40 envoie, à l'unité de gestion de profil FPA 13 du dispositif APP 12, le package PPP 41, l'unité de gestion de profil FPA 13 enregistrant celui-ci dans la mémoire non volatile MEM_APP 30 du dispositif APP 12. Autrement dit, le serveur FCT_SRV 40 charge le package PPP 41 dans le dispositif APP 12.

On note que, lors de la première phase de chargement S110, le serveur d'usine FCT_SRV 40 n'est pas nécessairement connecté au serveur SM-DPf 10 (c'est-à-dire qu'il peut fonctionner en mode non connecté). Le package PPP 41 du profil P 38 peut être préalablement généré par le serveur SM-DPf 10 et fourni au serveur d'usine FCT_SRV 40.

En variante, le dispositif APP 12 reçoit le package PPP 41 directement du serveur SM-DPf 10.

Tel qu'illustré par le mode de réalisation de la Figure 6, à l'issue de l'étape S110, le dispositif de communication APP conserve en mémoire : le package PPP 41 incluant les éléments chiffrés xPE 42 du profil P 38.

Cependant, ni l'unité de gestion de profil FPA 13, ni l'élément de sécurité SE 15 ne dispose des informations présentes dans le bounding header BH 25, indispensables pour déchiffrer le package PPP 41. Ainsi, le dispositif APP 12 ne dispose pas, à l'issue de l'étape S110, de toutes les informations nécessaires pour terminer l'installation du profil P 38 dans l'élément sécurisé SE 15.

Postérieurement à l'étape S110, et qui peut avoir lieu, par exemple, quelques minutes, des heures, des semaines ou des mois après la fin de l'étape S110, un événement déclencheur spécifique EVT 100, externe ou interne au dispositif est notifié au FPA 13, par exemple une (ré-)initialisation de l'alimentation du dispositif de communication APP 12, ou bien une notification de fin d'une batterie de tests, par exemple, de conformité du dispositif APP 12. Le FPA 13 détermine de cette notification d'événement EVT 100 correspond à un besoin de chargement de profil P 38 dans l'élément sécurisé SE 15. Dans un autre exemple encore, non-limitatif, le dispositif APP 12 est arrêté suite à la réalisation de l'étape S110 puis redémarré, suite à la survenue de l'événement EVT 100, dans le cadre d'un déploiement du dispositif de communication APP 12 sur le terrain c'est-à-dire que le dispositif APP 12 est sorti d'usine et est, par exemple, fourni à un utilisateur.

Toutefois, dans le cadre de l'invention, il pourrait également être envisagé des modes de réalisation selon lesquels le dispositif de communication APP 12 est maintenu sous tension (c'est-à-dire reste allumé) entre l'étape S110 et l'étape S111.

De manière générale, aucune limitation n'est attachée aux opérations réalisées par le dispositif APP 12 entre l'étape S110 et l'étape S111. De même, aucune limitation n'est attachée à la durée entre l'étape S110 et l'étape S111. À titre indicatif, le dispositif de communication APP 12 pourrait réaliser, de manière similaire au procédé décrit ci-dessus, une première phase de chargement d'un autre package de profil protégé PPP 41 dans la mémoire du dispositif de communication APP 12.

À l'étape S111, l'unité de gestion de profil FPA 13 envoie, à l'élément sécurisé SE 15, une commande d'initialisation CMD_LBPP du chargement du profil P 38 (ou notification de déclenchement de chargement de profil P 38) contenant l'identifiant de profil ICCID 43 associé au PPP 41 que l'on souhaite charger et installer, donc lié à l'élément sécurisé SE 15.

À l'étape S112, l'élément sécurisé SE 15 reçoit l'ICCID 43 transmis par la commande CMD_LBPP. Il calcule et génère alors une signature cryptographique SIGNeuicc, par exemple en utilisant une clé privée Ksign-euicc-priv et un algorithme cryptographique, par exemple RSA (pour Rivest Shamir Adleman) pour signer l'ICCID 43 reçu, accompagné de l'identifiant unique de l'élément sécurisé SE 15, par exemple l'EID pour une eUICC.

À l'étape S113, en réponse à la commande d'initialisation CMD_LBPP, l'élément sécurisé SE 15 renvoie au FPA 13 une réponse contenant son numéro d'identification unique EID, l'ICCID 43 reçu à l'étape S111 et la signature SIGNeuicc calculée à l'étape S112.

À l'étape S114, le FPA 13, après réception de la réponse à la notification de déclenchement de chargement de profil contenant l'EID, l'ICCID 43 et la signature SIGNeuicc, envoie une requête de transfert de BH 25 au serveur SM-DPf 10, alternativement par l'intermédiaire du DM 14. La requête de transfert de BH 25 contient l'identifiant de l'élément sécurisé SE 15 (par exemple l'EID de l'eUICC) pour lequel la requête est effectuée, ainsi que l'identifiant du profil (par exemple l'ICCID 43 associé au PPP 41 précédemment reçu) souhaité pour l'élément sécurisé SE 15 et la signature SIGNeuicc calculée par l'élément sécurisé SE 15.

À l'étape S115, le serveur SM-DPf 10, après réception de la requête de transfert de BH 25 contenant l'identifiant de l'élément sécurisé SE 15 (par exemple EID pour une eUICC), l'identifiant du profil (ICCID 43), et la signature SIGNeuicc, authentifie l'élément sécurisé SE 15 avec la signature SIGeuicc, en vérifiant, par exemple en utilisant une clé publique Ksign-euicc-pub, notamment les données reçues, donc l'authenticité et l'intégrité des données reçues (ICCID 43, EID). En cas de succès de l'authentification de l'élément sécurisé et de l'intégrité des données, le serveur SM-DPf déduit de l'identifiant de l'élément sécurisé SE 15 (par exemple l'EID) chaque profil P 38 à installer dans l'élément sécurisé SE 15.

En particulier, le SM-DPf 10 vérifie que ce profil P 38 n'a pas encore été installé dans un élément sécurisé SE 15. Le serveur SM-DPf 10, en cas de vérification positive, génère le Bounding Header BH 25 destiné uniquement au profil d'identifiant ICCID 43 et à l'élément sécurisé SE 15 d'identifiant EID, ces deux identifiants ayant été reçus dans la requête de transfert de BH 25. L'association ICCID-EID (soit une association unique profil-élément sécurisé) s'effectue par le serveur SM-DPf 10 en utilisant une clé unique par exemple, éphémère, dite clé de session KSsm-dpf 45, associée à une clé unique de session locale de l'élément sécurisé KSeuicc 44, pour chiffrer, dans le BH 25, notamment la clé KPP qui sera transmise à l'élément sécurisé SE 15 dans le cadre du transfert du BH 25 généré.

Seul l'élément sécurisé SE 15 possédant la clé de session locale KSeuicc 44 associée à la clé de session du serveur SM-DPf 10 utilisé dans le cadre de la génération du BH 25, notamment du chiffrement de la clé de protection de profil KPP, pourra déchiffrer la clé KPP, utilisée pour chiffrer le PPP 41. Ainsi, de façon irréfutable, on a l'assurance d'un chargement unique d'un profil P 38 considéré sur un seul élément sécurisé SE 15. Un même profil P 38 ne pourra donc pas être installé sur deux éléments sécurisés différents. En outre, tel que déjà mentionné, la clé de session KSsm-dpf 45 est aussi utilisée pour chiffrer le champ CI et calculer les données MAC du champ SM du BH 25. En variante, le serveur SM-DPf 10 calcule une signature cryptographique SIGNsm-dpf, en utilisant une clé privée Ksign-sm-dpf-priv et un algorithme cryptographique, par exemple RSA pour signer l'ensemble ICCID 43, EID et BH 25. Cette signature, dans le cadre de cette variante, permettra à l'élément sécurisé SE 15, destinataire de la réponse, de vérifier l'authenticité et l'intégrité des données en provenance du serveur SM-DPf 10, notamment le BH 25.

À l'étape S116, le SM-DPf 10 transmet le bounding header BH 25 du profil P 38 à charger dans l'élément sécurisé SE 15, associé à l'identifiant unique de l'élément sécurisé SE 15 et de l'identifiant du profil ICCID 43, au FPA 13, alternativement par l'intermédiaire du DM 14. En variante, le serveur SM-DPf 10 transmet aussi la signature SIGNsm-dp.

À l'étape S117, le FPA 13 transmet le BH 25 accompagné du PPP 41, de l'ICCID 43 et de l'EID à l'élément sécurisé SE 15. L'identifiant ICCID 43 associé au BH 25 reçu, permet au FPA 13 de récupérer le PPP 41 associé à ce même ICCID 43, avant de le transmettre à l'élément sécurisé SE 15 en compagnie du BH 25 et des autres données (notamment l'ICCID 43 et l'EID). En variante, la signature SIGNsm-dpf est aussi transmise à l'élément sécurisé SE 15 en compagnie du BH 25, du PPP 41 et des autres données.

À l'étape S118, l'élément sécurisé SE 15, avec les informations reçues dans le BH 25, notamment par l'intermédiaire le champ InitialiseSecureChannel 29, déchiffre les données des champs CI, SM et PPK du BH 25 reçu et vérifie les données MAC associées au champ SM du BH 25 reçu. En effet, tel que mentionné précédemment dans le texte, le champ InitialiseSecureChannel 29 comporte des données qui représentent (par exemple un certificat du serveur SM-DPf 10) ou permettent d'identifier (par exemple un identifiant unique de clé de session) la clé de session KSsm-dpf 45 utilisée, par le serveur SM-DPf 10, pour chiffrer les données des champs CI, SM et PPK et pour calculer les données MAC associées au champ SM du BH 25 reçu. L'élément sécurisé SE 15, de son côté, est en mesure de retrouver, ou, alternativement de générer, et d'utiliser une clé de session locale KSeuicc 44, associée à la clé de session KSsm-dpf 45 (à savoir, par exemple, une clé privée associée ou une clé symétrique associée) pour permettre le déchiffrement et/ou la vérification des éléments du BH 25 reçu. Les données du champ InitialiseSecureChannel 29 permettent donc à l'élément sécurisé SE 15 d'identifier la clé de session KSeuicc 44 locale qui doit être utilisée par l'élément sécurisé SE 15 pour déchiffrer avec succès les données des champs CI, SM et PPK et pour calculer avec succès les données MAC associées au champ SM du BH 25 reçu. Ces données du champ InitialiseSecureChannel 29 sont, par exemple, un identifiant d'une clé de session locale KSeuicc 44 à utiliser, ou par exemple un certificat du serveur SM-DPf 10.

Les clés, côté élément sécurisé SE 15, identifiées via les données du champ initialiseSecureChannel 29, ont été préalablement stockées ou générées lors de la fabrication de l'élément sécurisé SE15 ou au cours d'une phase de personnalisation ou de pré-personnalisation de l'élément sécurisé SE 15. Cette phase intervenant en amont de l'étape S110. Avec la clé de session locale KSeuicc 44, l'élément sécurisé SE 15 déchiffre la clé de chiffrement PPK avec laquelle le PPP 41 a été chiffré. Puis, avec cette clé PPK, l'élément sécurisé SE 15 déchiffre le PPP 41. Les clés de session KSeuicc 44 et KSsm-dpf 45 sont temporaires, par exemple utilisables une fois, et ne sont exploitables que pour un profil P 38 et un élément sécurisé SE 15 considéré. Association et unicité sont ainsi assurées entre un profil P 38 et un élément sécurisé SE 15. Le profil P 38 est associé de façon unique à un seul élément sécurisé SE 15 (« binding » en anglais ou liaison). Dans une variante, les clés de session KSeuicc 44 et KSsm-dpf 45 associées sont étiquetées « inutilisables », par exemple par l'utilisation d'un drapeau ou d'un tag dédié, une fois l'installation du profil P 38 effectuée. En variante, préalablement au déchiffrement du BH 25, l'élément sécurisé SE 15 vérifie, par exemple en utilisant une clé publique Ksign-sm-dpf-pub, la signature SIGNsm-dpf reçue en compagnie du BH 25 et des différentes données (notamment l'ICCID 43 et l'EID) et effectue, ensuite, le déchiffrement du BH 25 seulement en cas de succès de vérification de la signature, garantissant ainsi l'authenticité et l'intégrité du BH 25 et des données reçues. En cas de non-succès de vérification, le déchiffrement n'est pas effectué et les données reçues rejetées.

À l'étape S119, de manière connue par l'homme du métier, l'élément sécurisé SE 15 installe chaque profil P 38 déchiffré dans sa mémoire. L'installation s'effectue si les déchiffrements notamment du BH 25 et du PPP 41 en étape S118 ont pu être effectués avec succès. Sinon aucune installation n'est réalisée et un résultat d'erreur d'installation sera envoyé à l'étape S120.

Enfin, à l'étape S120, l'élément sécurisé SE renvoie le résultat de l'installation du profil P 38 au FPA 13. En variante, ce résultat d'installation pourra être transmis, par le FPA 13, au DM 14 et/ou au serveur SM-DPf 10.

Il est à noter que l'ordre dans lequel s'enchaînent les étapes d'un procédé mis en œuvre par un élément sécurisé SE 15 équipant un dispositif de communication APP 12 ou les étapes d'un procédé mis en œuvre par une unité de gestion de profil FPA 13 du dispositif de communication APP 12, notamment en référence aux dessins ci-joints, ne constitue qu'un exemple de réalisation dépourvu de tout caractère limitatif, des variantes étant possibles.

Un homme du métier comprend que les modes de réalisation et variantes décrits ci-dessus ne constituent que des exemples non limitatifs de mise en œuvre de l'invention. En particulier, l'homme du métier pourra envisager une quelconque adaptation ou combinaison des modes de réalisation et variantes décrits ci-dessus afin de répondre à un besoin bien particulier.

Le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné.

## Revendications

1. Procédé de chargement d'un profil (P 38) dans un élément sécurisé (SE 15) équipant un dispositif de communication (APP 12), **caractérisé en ce qu'**il comporte, successivement, pour le chargement de ce profil de communication (P) :
a) une première phase (S51 à S58, S110) de personnalisation du dispositif de communication (APP), comportant une première étape (S54 à S57) de transmission au dispositif de communication (APP) de données chiffrées représentatives du profil (P) depuis un serveur de fourniture de profil (SM-DPf 10) et une étape (S58) de mémorisation desdites données chiffrées dans ce dispositif de communication (APP) ; et
b) une deuxième phase (S59 à S66, S111 à S120) de liaison du profil (P) avec un identifiant (EID) de l'élément sécurisé (SE), comportant une étape (S63, S115) d'authentification de l'élément sécurisé (SE) par le serveur de fourniture de profil (SM-DPf), une deuxième étape (S64, S116, S117) de transmission d'éléments cryptographiques permettant le déchiffrement des données chiffrées représentatives du profil (P), depuis le serveur de fourniture de profil (SM-DPf) à l'élément sécurisé (SE), une étape (S65, S118) de déchiffrement des données chiffrées représentatives du profil (P) par l'élément sécurisé (SE) et une étape (S66, S119) d'installation du profil (P) par l'élément sécurisé (SE).

2. Procédé de chargement d'un profil (P 38) dans un élément sécurisé (SE 15) selon la revendication 1, dans lequel :
- pendant la première étape (S54 à S57) de transmission, le serveur de fourniture de profil (SM-DPf 10) transmet au dispositif de communication (APP 12) des données représentatives du profil (P) chiffrées par une clé (PPK), sans ladite clé ni d'éléments cryptographiques suffisants pour l'obtenir sans communication avec ledit serveur de fourniture de profil (SM-DPf) ; et
- la deuxième phase (S59 à S66, S111 à S120) comporte, une étape (S62, S114) de demande sécurisée entre l'élément sécurisé (SE) et le serveur de fourniture de profil (SM-DPf), et en réponse à cette demande sécurisée, la deuxième étape (S64, S116, S117) de transmission d'éléments cryptographiques comporte la transmission d'une clé de déchiffrement des données représentatives du profil (P).

3. Procédé de chargement d'un profil (P 38) dans un élément sécurisé (SE 15) selon la revendication 2, dans lequel :
- pendant la première étape (S54 à S57) de transmission, le serveur de fourniture de profil (SM-DPf 10) transmet au dispositif de communication (APP 12) un package de profil protégé (PPP 41) comportant le profil (P), et
- pendant l'étape (S58) de mémorisation desdites données chiffrées dans ce dispositif de communication (APP 12), la mémoire de dispositif où est mémorisé le package de profil protégé (PPP 41) est différente de la mémoire de l'élément sécurisé (SE).

4. Procédé de chargement d'un profil (P 38) dans un élément sécurisé (SE 15) selon l'une des revendications 1 à 3, dans lequel la deuxième phase (S59 à S66, S111 à S120) de liaison du profil (P) avec un identifiant (EID) de l'élément sécurisé, comporte une étape (S61, S62, S113, S114) de transmission, par l'élément sécurisé (SE) au serveur de fourniture de profil (SM-DPf 10), dudit identifiant (EID) de l'élément sécurisé et d'un identifiant de profil (ICCID 43).

5. Procédé de chargement d'un profil (P 38) dans un élément sécurisé (SE 15) selon la revendication 4, qui comporte une étape (S63, S115) de vérification que l'identifiant de profil (ICCID 43) n'a pas déjà été lié avec un autre identifiant (EID) d'élément sécurisé et, si cet identifiant de profil a déjà été lié avec un autre identifiant (EID) d'élément sécurisé, la deuxième étape (S64, S116, S117) de transmission d'éléments cryptographiques n'est pas effectuée.

6. Procédé de chargement d'un profil (P 38) dans un élément sécurisé (SE 15) selon la revendication 2 ou l'une des revendications 3 à 5 lorsqu'elles dépendent de la revendication 2, dans lequel la deuxième étape (S64, S116, S117) de transmission d'éléments cryptographiques depuis le serveur de fourniture de profil (SM-DPf 10) à l'élément sécurisé (SE) comporte la transmission d'un en-tête de liaison (BH 25) comportant :
- un champ (CI) comportant des données relatives à un opérateur de réseau principal (MNO),
- un champ (SM) qui caractérise le profil (P) en vue de sa vérification,
- la clé de déchiffrement (PPK) chiffrée avec une clé de session (KSsm-dpf 45) du serveur de fourniture de profil (SM-DPf), et
- un champ InitialiseSecureChannel (29) comportant des données représentant ladite clé de session (KSsm-dpf 45) utilisée par le serveur de fourniture de profil (SM-DPf) pour chiffrer le champ (CI) comportant des données relatives à l'opérateur de réseau principal (MNO), la clé de déchiffrement (PPK) et des données de code d'authentification de message (MAC) associées au champ (SM) qui caractérise le profil (P).

7. Procédé de chargement d'un profil (P 38) dans un élément sécurisé (SE 15) selon la revendication 2 ou l'une des revendications 3 à 6 lorsqu'elles dépendent de la revendication 2, dans lequel la clé (PPK) de chiffrement des données représentatives du profil (P) est une clé symétrique (PPK), la deuxième étape (S64, S116, S117) de transmission d'éléments cryptographiques depuis le serveur de fourniture de profil (SM-DPf 10) à l'élément sécurisé (SE) comportant la transmission de cette clé symétrique (PPK).

8. Procédé de chargement d'un profil (P 38) dans un élément sécurisé (SE 15) selon l'une des revendications 4, 5 ou selon l'une des revendications 6 ou 7 lorsqu'elles dépendent de la revendication 4, qui comporte une étape (S60, S112) de calcul, par l'élément sécurisé (SE) d'une signature (SIGNeuicc) de l'identifiant de profil (ICCID 43) et de l'identifiant (EID) de cet élément sécurisé (SE), préliminairement à l'étape (S61, S62, S113, S114) de transmission au serveur de fourniture de profil (SM-DPf), de ces identifiants.

9. Procédé de chargement d'un profil (P 38) dans un élément sécurisé (SE 15) selon l'une des revendications 1 à 8, qui comporte une pluralité de premières étapes (S54 à S57) de transmission à des dispositifs de communication (APP 12) différents, de données chiffrées représentatives du même profil (P) depuis un serveur (DM 14) de fabricant de dispositifs de communication (APP) et une pluralité d'étapes (S58) de mémorisation desdites données chiffrées dans ces dispositifs de communication (APP).

10. Procédé de chargement d'un profil (P 38) dans un élément sécurisé (SE 15) selon l'une des revendications 1 à 9, dans lequel les étapes de la deuxième phase sont séparées des étapes de la première phase par au moins la survenance d'un événement déclencheur (EVT 100) notifié à une unité de gestion de profil (FPA 13).

11. Procédé de chargement d'un profil (P 38) dans un élément sécurisé (SE 15) selon la revendication 10, dans lequel l'événement déclencheur (EVT 100) est au moins l'un parmi la liste d'événements suivants:
- une interaction avec un utilisateur terminal du dispositif de communication (APP 12) ;
- un arrêt et un démarrage du dispositif de communication ;
- la fin d'une batterie de tests du dispositif de communication ;
- un premier démarrage du terminal de communication hors usine ;
- une initialisation ou une réinitialisation de l'alimentation du dispositif de communication.

12. Procédé de chargement d'un profil (P 38) depuis un serveur de fourniture de profil (SM-DPf), mis en œuvre dans un élément sécurisé (SE 15) équipant un dispositif de communication (APP 12), **caractérisé en ce qu'**il comporte, successivement, pour le chargement de ce profil de communication (P) :
a) une première phase (S51 à S58, S110) de personnalisation du dispositif de communication (APP), comportant une première étape (S54 à S57) de réception, par le dispositif de communication (APP) de données chiffrées représentatives du profil (P) depuis le serveur de fourniture de profil (SM-DPf 10), sans ladite clé ni d'éléments cryptographiques suffisants pour l'obtenir sans communication avec ledit serveur de fourniture de profil (SM-DPf), et une étape (S58) de mémorisation desdites données chiffrées dans ce dispositif de communication (APP) ; et
b) une deuxième phase (S59 à S66, S111 à S120) de liaison du profil (P) avec un identifiant (EID) de l'élément sécurisé (SE), comportant une étape de transmission, par l'élément sécurisé (SE) au serveur de fourniture de profil (SM-DPf), d'un identifiant (EID) de l'élément sécurisé et d'un identifiant du profil (ICCID 43),
une deuxième étape (S64, S116, S117) de réception, par l'élément sécurisé (SE 15) d'éléments cryptographiques permettant le déchiffrement des données chiffrées représentatives du profil (P), depuis le serveur de fourniture de profil (SM-DPf), une étape (S65, S118) de déchiffrement des données chiffrées représentatives du profil (P) par l'élément sécurisé (SE) et une étape (S66, S119) d'installation du profil (P) par l'élément sécurisé (SE).

13. Programme d'ordinateur (PROG_SE 37, PROG_APP 32) comportant des instructions pour l'exécution des étapes du procédé selon la revendication 12.

14. Support d'informations (MEM_SE 35, MEM_APP 30) lisible par un processeur (PROC_SE 36, PROC_APP 31) sur lequel est enregistré un programme d'ordinateur (PROG_SE 37, PROG_APP 32) selon la revendication 13.

15. Procédé de chargement d'un profil (P 38) dans un élément sécurisé (SE 15) équipant un dispositif de communication (APP 12) mis en œuvre par un serveur de fourniture de profil (SM-DPf), **caractérisé en ce qu'**il comporte, successivement, pour le chargement de ce profil de communication (P) :
a) une première phase (S51 à S58, S110) de personnalisation du dispositif de communication (APP), comportant une première étape (S54 à S57) de transmission au dispositif de communication (APP) de données chiffrées représentatives du profil (P), sans ladite clé ni d'éléments cryptographiques suffisants pour l'obtenir sans communication avec ledit serveur de fourniture de profil (SM-DPf) depuis un serveur de fourniture de profil (SM-DPf 10) ; et
b) une deuxième phase (S59 à S66, S111 à S120) de liaison du profil (P) avec un identifiant (EID) de l'élément sécurisé (SE), comportant une étape (S63, S115) d'authentification de l'élément sécurisé (SE) par le serveur de fourniture de profil (SM-DPf) et une deuxième étape (S64, S116, S117) de transmission d'éléments cryptographiques permettant le déchiffrement des données chiffrées représentatives du profil (P), depuis le serveur de fourniture de profil (SM-DPf) à l'élément sécurisé (SE).

16. Élément sécurisé (SE 15) équipant un dispositif de communication (APP 12), **caractérisé en ce qu'**il comporte un processeur configuré pour charger ce profil de communication (P) en effectuant successivement :
a) une première phase (S51 à S58, S110) de personnalisation du dispositif de communication (APP), comportant une première étape (S54 à S57) de réception, par le dispositif de communication (APP) de données chiffrées représentatives du profil (P) sans ladite clé ni d'éléments cryptographiques suffisants pour l'obtenir sans communication avec ledit serveur de fourniture de profil (SM-DPf), depuis le serveur de fourniture de profil (SM-DPf 10) et une étape (S58) de mémorisation desdites données chiffrées dans ce dispositif de communication (APP) ; et
b) une deuxième phase (S59 à S66, S111 à S120) de liaison du profil (P) avec un identifiant (EID) de l'élément sécurisé (SE), comportant une étape de transmission, par l'élément sécurisé (SE) au serveur de fourniture de profil (SM-DPf), d'un identifiant (EID) de l'élément sécurisé et d'un identifiant du profil (ICCID 43),
une deuxième étape (S64, S116, S117) de réception, par l'élément sécurisé (SE 15) d'éléments cryptographiques permettant le déchiffrement des données chiffrées représentatives du profil (P), depuis le serveur de fourniture de profil (SM-DPf), une étape (S65, S118) de déchiffrement des données chiffrées représentatives du profil (P) par l'élément sécurisé (SE) et une étape (S66, S119) d'installation du profil (P) par l'élément sécurisé (SE).

17. Dispositif de communication (APP 12) comprenant un élément sécurisé (SE) selon la revendication 16.

18. Serveur de fourniture de profil (DM-DPf 10) **caractérisé en ce qu'**il comporte un processeur configuré pour charger un profil de communication (P 38) dans un élément sécurisé (15) en effectuant successivement :
a) une première phase (S51 à S58, S110) de personnalisation du dispositif de communication (APP), comportant une première étape (S54 à S57) de transmission au dispositif de communication (APP) de données chiffrées représentatives du profil (P), sans ladite clé ni d'éléments cryptographiques suffisants pour l'obtenir sans communication avec ledit serveur de fourniture de profil (SM-DPf) depuis un serveur de fourniture de profil (SM-DPf 10) ; et
b) une deuxième phase (S59 à S66, S111 à S120) de liaison du profil (P) avec un identifiant (EID) de l'élément sécurisé (SE), comportant une étape (S63, S115) d'authentification de l'élément sécurisé (SE) par le serveur de fourniture de profil (SM-DPf) et une deuxième étape (S64, S116, S117) de transmission d'éléments cryptographiques permettant le déchiffrement des données chiffrées représentatives du profil (P), depuis le serveur de fourniture de profil (SM-DPf) à l'élément sécurisé (SE).
